# EUROPEAN PATENT APPLICATION

(11) **EP 3 133 486 A1**
(43) Date of publication of application: **22.02.2017**
(21) Application number: 16184514.4
(22) Date of filing: 17.08.2016
(51) Int. Cl.: G06F 3/12, H04N 1/00

(54) **IMAGE FORMING METHOD, IMAGE FORMING DEVICE, AND COMPUTER-READABLE RECORDING MEDIUM THEREFOR**

(30) Priority: 19.08.2015 JP 2015162306; 24.03.2016 KR 20160035525
(71) Applicant: Samsung Electronics Co., Ltd., Suwon-si, Gyeonggi-do 16677 (KR)
(72) Inventor: Sasajima, Manabu, 16677 Suwon-si (KR); Minamide, Keiichi, 16677 Suwon-si (KR); Fujimura, Noriyuki, 16677 Suwon-si (KR)
(74) Representative: Nederlandsch Octrooibureau

(57) **Abstract**

An image forming device is provided. The image forming device includes at least one memory, a display configured to display at least one print image based on at least one file, and at least one processor configured to control to select at least one of the at least one displayed print image, as a page to print (print page), based on a received instruction, perform a print process based on the at least one selected print page, acquire the at least one file from at least one file storage area connected to an external system and provide the acquired file to the display, and create print data, based on at least one print page that has received a selection instruction via the selection.

## Description

### TECHNICAL FIELD

The present disclosure relates to an image forming device, an image forming method, and a computer-readable recording medium therefor.

### BACKGROUND

When users need to perform printing via an image forming device (e.g., printer), users, they: select an object to be printed (e.g., a document, a photo, a web page, etc.) from an image supply device (e.g., a computer such as a personal computer, etc.) connected to the image forming device; and set up print options (e.g., the number of pages, print orientation, color/black and white, etc.), so that the image forming device can print out the object to be printed as they want. For example, a user selects individual objects to be printed, stored from folder to folder in a number of folders, using a print control device (or an image supply device), thereby allowing the image forming device to print the selected objects. Alternatively, the print control device can select an image to be printed from among the images stored in a folder.

As described above, printing methods of the related art need to select a file or an image to be printed, using the image supply device. When a user performs the printing via printing methods of the related art, although he/she is close to an image forming device (printer), printing methods of the related art require him/her to return to a place where an image supply device is installed and to operate the image supply device. After operating the image supply device, the user needs to return to a place where the image forming device is installed and to take out the printed paper. These printing methods of the related art cause user inconvenience during printing.

Other aspects, advantages, and salient features of the disclosure will become apparent to those skilled in the art from the following detailed description, which, taken in conjunction with the annexed drawings, discloses various embodiments of the present disclosure.

### SUMMARY

Aspects of the present disclosure are to address at least the above-mentioned problems and/or disadvantages and to provide at least the advantages described below. Accordingly, an aspect of the present disclosure is to provide an image forming device, an image forming method and a recording medium, which are capable of controlling the print page setup, without directly operating a print control device (or an image forming device), and performing the printing, based on the settings.

In accordance with an aspect of the present disclosure, an image forming device is provided. The image forming device includes at least one memory, a display configured to display at least one print image based on at least one file, and at least one processor configured to control to select at least one of the at least one displayed print image, as a page to print (print page), based on a received instruction, perform a print process based on the at least one selected print page, acquire the at least one file from at least one file storage area connected to an external system and provide the acquired file to the display, create print data, based on at least one print page that has received a selection instruction via the selection.

In accordance with another aspect of the present disclosure, an image forming method of an image forming device is provided. The image forming method includes displaying, by a display, print images based on at least one file, receiving an instruction for selecting a page to print (print page) from the displayed print images, performing a print process based on the print page, acquiring at least one file from a file storage area connected to an external system, providing the acquired file to the display, and creating print data based on the print page which has received a selection instruction.

In accordance with another aspect of the present disclosure, a non-transitory computer-readable recording medium storing a software program of instructions configured to be readable by at least one processor for instructing the at least one processor to execute a computer process for performing a method is provided. The method includes acquiring at least one file from a file storage area connected to an external system, displaying a print image based on the at least one file, receiving an instruction for selecting a print page from the displayed print image, creating print data based on the selected print page, and performing a print process based on the print data.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram showing the architecture of a print system with an image forming device according to an embodiment of the present disclosure;
FIG. 2 is a block diagram showing function components of the image forming device shown in FIG. 1 according to an embodiment of the present disclosure;
FIG. 3 is a flowchart that describes an image forming method of the image forming device shown in FIG. 1 according to an embodiment of the present disclosure;
FIG. 4 is a detailed flowchart that describes a print page setup process of the method referring to FIG. 3 according to an embodiment of the present disclosure;
FIG. 5 is a diagram showing a log-in screen displayed on a display unit shown in FIG. 2 according to an embodiment of the present disclosure;
FIG. 6 is a diagram showing a menu screen displayed on a display unit shown in FIG. 2 according to an embodiment of the present disclosure;
FIG. 7 is a diagram showing a screen on which content stored in a logged-in user's mobile terminal is displayed according to an embodiment of the present disclosure;
FIG. 8 is a diagram showing a screen on which selected content is displayed according to an embodiment of the present disclosure;
FIG. 9 is a diagram showing a screen on which related information is displayed according to an embodiment of the present disclosure;
FIG. 10 is a diagram showing a screen whose display area displays related information according to an embodiment of the present disclosure;
FIG. 11 is a diagram showing a screen to describe when related information is selected according to an embodiment of the present disclosure;
FIG. 12 is a diagram showing a screen to describe when related information is selected according to an embodiment of the present disclosure;
FIG. 13 is a diagram showing a screen to describe when related information is selected according to an embodiment of the present disclosure;
FIG. 14 is a diagram showing a screen to describe when related information is selected according to an embodiment of the present disclosure;
FIG. 15 is a diagram showing a screen to describe when related information is selected according to an embodiment of the present disclosure;
FIG. 16 is a diagram showing a screen when a page as an object to be printed is selected according to an embodiment of the present disclosure;
FIG. 17 is a diagram showing a screen on which a print page setup menu is displayed according to an embodiment of the present disclosure;
FIG. 18 is a diagram showing a screen when an icon for initiating a print page setup is touched according to an embodiment of the present disclosure;
FIG. 19 is a diagram showing a print page setup screen according to an embodiment of the present disclosure;
FIG. 20 is a diagram that describes a case when the orientation of a printer page (a sheet of paper) is changed according to an embodiment of the present disclosure;
FIG. 21 is a diagram showing a preview screen where the printer page is laid out in landscape and a page to print (a print page) is laid out in portrait according to an embodiment of the present disclosure;
FIG. 22 is a diagram showing a preview screen displaying multiple printer pages in thumbnail view according to an embodiment of the present disclosure;
FIG. 23 is a diagram that describes a case when the printing order of a print page is changed according to an embodiment of the present disclosure;
FIG. 24 is a diagram that describes a case when the printing order of a print page is changed according to an embodiment of the present disclosure;
FIG. 25 is a diagram that describes a method of altering the layout of printer pages according to an embodiment of the present disclosure;
FIG. 26 is a diagram that describes a method of altering the layout of printer pages according to an embodiment of the present disclosure;
FIG. 27 is a diagram showing a screen for setting the number of copies according to an embodiment of the present disclosure;
FIG. 28 is a diagram that describes another example of a log-in area according to an embodiment of the present disclosure;
FIG. 29 is a diagram that describes an interrupt use mode according to an embodiment of the present disclosure;
FIG. 30 is a diagram that describes a common use mode according to an embodiment of the present disclosure;
FIG. 31 is a diagram showing a screen for setting the number of copies according to an embodiment of the present disclosure;
FIG. 32 is a diagram that describes a method of altering the layout of printer pages according to an embodiment of the present disclosure;
FIG. 33 is a diagram that describes a method of altering the layout of printer pages according to an embodiment of the present disclosure;
FIG. 34 is a diagram that describes a method of altering the layout of printer pages according to an embodiment of the present disclosure;
FIG. 35 is a diagram that describes a method of altering the layout of printer pages according to an embodiment of the present disclosure;
FIG. 36 is a diagram that describes a method of altering the layout of printer pages according to an embodiment of the present disclosure;
FIG. 37 is a diagram that describes a method of setting the layout of pages to print (print pages) by making a zoom-out motion according to an embodiment of the present disclosure;
FIG. 38 is a diagram that describes a method of setting the layout of print pages by making a zoom-out motion according to an embodiment of the present disclosure;
FIG. 39 is a diagram that describes a method of altering the layout of print pages by making a rotating motion according to an embodiment of the present disclosure;
FIG. 40 is a diagram that describes a method of altering the layout of a print page by changing the orientation of the print page according to an embodiment of the present disclosure;
FIG. 41 is a diagram that describes a method of altering the orientation of a printer page and the orientation of print pages according to an embodiment of the present disclosure
FIG. 42 is a diagram that describes a method of altering the location of print pages in a printer page according to an embodiment of the present disclosure;
FIG. 43 is a diagram that describes the order of arranging print pages in a printer page according to an embodiment of the present disclosure;
FIG. 44 is a diagram showing a layout template according to an embodiment of the present disclosure;
FIG. 45 is a diagram showing a layout template according to an embodiment of the present disclosure;
FIG. 46 is a diagram showing an example of a layout template stored in the storage unit shown in FIG. 2 according to an embodiment of the present disclosure;
FIG. 47 is a diagram that describes a method of altering the size of split areas according to an embodiment of the present disclosure;
FIG. 48 is a diagram that describes a method of arranging print pages in a layout template according to an embodiment of the present disclosure;
FIG. 49 is a diagram that describes cases when the size of print pages is changed and when the size of print pages is not changed, with respect to a layout template according to an embodiment of the present disclosure;
FIG. 50 is a diagram that describes a method of applying various types of edit to print pages distributed to printer pages according to an embodiment of the present disclosure;
FIG. 51 is a diagram that describes a method of altering arranged print pages according to an embodiment of the present disclosure;
FIG. 52 is a diagram that describes a method of arranging a number of print pages according to layout templates according to an embodiment of the present disclosure;
FIG. 53 is a diagram that describes a method of editing photographic data according to an embodiment of the present disclosure;
FIG. 54 is a diagram that describes a method of displaying menus related to print pages or printer pages according to an embodiment of the present disclosure;
FIG. 55 is a diagram that describes a method of selecting a print page or a printer page according to an embodiment of the present disclosure;
FIG. 56 is a diagram that describes a method of setting the number of copies according to an embodiment of the present disclosure;
FIG. 57 is a diagram that describes a method of setting the number of copies according to an embodiment of the present disclosure; and
FIG. 58 is a diagram that describes a method of setting the number of copies according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the present disclosure, the expression "configured (set or implemented) to do" may be interchangeable with, for example, "suitable for doing," "having the capacity to do," "adapted to do," "made to do," "capable of doing," or "designed to do" in terms of hardware or software. The expression "a device configured to do" may indicate that the device is "capable of doing" something with other devices or parts. For example, the expression "a processor configured (or set) to do A, B and C" may refer to a dedicated processor (e.g., an embedded processor) or a generic-purpose processor (e.g., central processing unit (CPU) or application processor) that may execute one or more software programs stored in a memory device to perform corresponding functions.

A mobile terminal according to various embodiments of the present disclosure may include one or more of the following: a smartphone, a tablet personal computer (PC), a mobile phone, a video phone, an e-book reader, a desktop PC, a laptop PC, a netbook computer, a workstation, a server, a personal digital assistant (PDA), a portable multimedia player (PMP), a Moving Picture Experts Group phase 1 or phase 2 (MPEG-1 or MPEG-2) audio layer 3 (MP3) player, a medical device, a camera, a wearable device, etc. Examples of the wearable device are: accessory types, e.g., watch, ring, bracelet, anklet, necklace, eyeglasses, contact lens, head-mounted-device (HMD), etc.; clothes or clothing integral types, e.g., electronic clothing, etc.; body attachment types, e.g., skin pad or tattoo, etc.; types of bio chip implant; etc.

A mobile terminal according to an embodiment may include at least one of the following: for example, a television (TV), a digital versatile disc (DVD) player, an audio system, a refrigerator, an air-conditioner, a cleaning device, an oven, a microwave oven, a washing machine, an air cleaner, a set-top box, a home automation control panel, a security control panel, a media box (e.g., Samsung HomeSync™, Apple TV™, or Google TV™), a game console (e.g., Xbox™, PlayStation™), an electronic dictionary, an electronic key, a camcorder, an electronic album, etc.

A mobile terminal according to an embodiment may include at least one of the following: various medical devices (e.g., various portable medical applications (e.g., a blood glucose monitor, a heart rate monitor, a blood pressure monitor, a temperature monitor, etc.), magnetic resonance angiography (MRA), magnetic resonance imaging (MRI), computed tomography (CT), a scanning machine, an ultrasonic wave device, etc.), a navigation device, a global navigation satellite system (GNSS), an event data recorder (EDR), a flight data recorder (FDR), a vehicle infotainment device, an electronic equipment for ships (e.g., navigation equipment, gyrocompass, etc.), avionics, a security device, a head unit for vehicle, an industrial or home robot, a drone, an automatic teller's machine (ATM), a point of sales (POS) system, internet of things (e.g., lights, various sensors, a sprinkler system, a fire warning system, a temperature controller, street lights, a toaster, fitness equipment, a hot water tank, a heater, a boiler, etc.), and so on.

A mobile terminal according to embodiments may include one or more of the following: furniture or a portion of a building/structure a vehicle, an electronic board, an electronic signature receiving device, a projector, various measuring instruments (e.g., a water meter, an electric meter, a gas meter, a wave mete, etc.), etc. In various embodiments, a mobile terminal may also include a combination of the components listed above. A mobile terminal according to an embodiment may be a flexible device. It is obvious to those skilled in the art that the mobile terminal according to various embodiments of the present disclosure is not limited to the aforementioned devices. In the description, the term a 'user' is referred to as a person or a device that uses a mobile terminal or an electronic device, e.g., an artificial intelligent electronic device.

In the following description, an image forming device according to an embodiment of the present disclosure is explained in detail referring to the accompanying drawings.

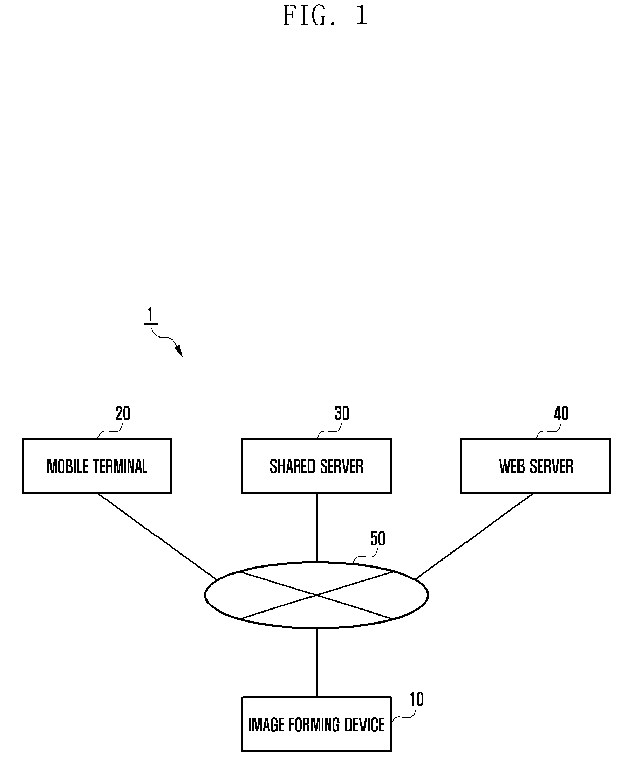

FIG. 1 is a block diagram showing the architecture of a print system 1 with an image forming device according to an embodiment of the present disclosure.

Referring to FIG. 1, the print system 1 is configured in such a way that an image forming device 10, a mobile terminal 20, a shared server 30 and a web server 40 are connected to each other via a network 50. The image forming device 10 is capable of printing print data. The mobile terminal 20 refers to users' computers which are installed to, for example, workplaces, homes, etc.

The shared server 30 refers to a server for serving organizations, such as companies, schools, etc. Users of an organization can access the shared server 30 via the mobile terminal 20 or the image forming device 10. The web server 40 may refer to a server that the mobile terminal 20 or the image forming device 10 connects to over the Internet, etc.

The mobile terminal 20, shared server 30, and web server 40 are each capable of including a storage device, such as a hard disk, a memory, etc. The mobile terminal 20, shared server 30, and web server 40 are each capable of providing data, stored in the storage area, to the image forming device 10, via the network 50, in response to the access from the image forming device 10. The web server 40 may refer to a cloud server employing cloud technology.

The storage device may be included in the mobile terminal 20, shared server 30, web server 40, cloud server, etc. Alternatively, the storage device may be a storage medium (e.g., a memory card, etc.) attached (connected) to the image forming device 10.

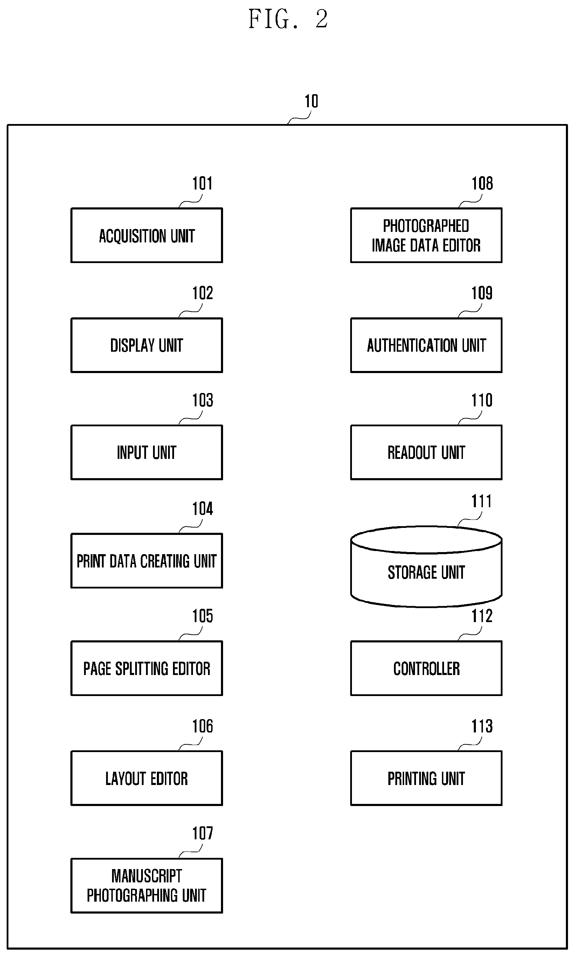

FIG. 2 is a block diagram showing function components of the image forming device shown in FIG. 1 according to an embodiment of the present disclosure.

Referring to FIG. 2, an acquisition unit 101 is capable of acquiring at least one file from a file storage area connected to an external system. The acquisition unit 101 is capable of acquiring files in a range of reference authority allowed for a logged-in user, from among a number of files stored in the file storage area. The acquisition unit 101 is capable of acquiring files within a range based on the reference authority allowed for a user corresponding to identification information which can have obtained authentication. The acquisition unit 101 is capable of acquiring a recommended file containing content related to a logged-in user from a server (e.g., web server 40). In the following description, the term 'file' is also called 'content' according to embodiments.

A display unit 102 is capable of displaying at least one print image based on at least one acquired file. The display unit 102 may also display print pages corresponding to individual pages for a number of acquired files. The display unit 102 may have a screen size, e.g., a size (e.g., of 24 inches) which can display an image of A3 as an actual object in size.

An input unit 103 is capable of receiving an instruction for selecting a page to print (a print page), from individual files displayed on the display unit 102. Alternatively, the input unit 103 is capable of receiving instructions for selecting individual pages contained in a number of files, as pages to print (print pages). The input unit 103 is capable of receiving a boundary for splitting printer pages (sheets of paper) or (pages to print (print pages). The input unit 103 is capable of receiving an instruction for selecting a page contained in a recommended file. The input unit 103 may be a touch panel. The display unit 102 and the input unit 103 may be integrated into a touch screen.

A print data creating unit 104 is capable of creating print data, based on the selected print page. A page splitting editor 105 is capable of allocating a number of print areas (print pages) to one page of a print medium (e.g., print paper) according to the received boundary. The page splitting editor 105 receives an input for instructing the combination (integration) of split print areas, and integrates the print areas together. A layout editor 106 is capable of determining a layout of a print area for a print medium, based on the print area and/or the printing orientation of the print medium. A manuscript photographing unit 107 is capable of taking an image of a manuscript on a photography copay stand and creating photographic image data. For example, the manuscript photographing unit 107 is located above the photography copy stand, taking an image of a manuscript, and creating photographic image data. The image forming device 10 according to an embodiment of the present disclosure is equipped with a scanning function. A photographic image data editor 108 is capable of editing the photographic image data according to an editing instruction.

An authentication unit 109 is capable of determining whether a user can be logged in, based on a user's log-in input. The authentication unit 109 is capable of performing the authentication based on identification information read out from the storage medium. The storage medium may be implemented with a radio frequency identifier (RFID) card, a near field communication (NFC) card, etc. A readout unit 110 is capable of reading out identification information for identifying users from a number of storage media approaching a communication range, respectively. The readout unit 110 may be implemented with a reader/writer, and located (installed) onto the backside of the touch screen. The readout unit 110 may set the communicable range in the horizontal direction to be similar in size to an image display area of a touch screen.

A storage unit (or a memory unit) 111 is capable of storing various types of information. For example, the storage unit 111 is capable of storing identification information regarding users who can use the image forming device 10. When a user owns an RFID card matching with identification information, the user can log in the image forming device 10. The storage unit 111 is capable of storing settings information set up by individual users. The user setup information refers to information regarding various types of content that individual users have set to use the image forming device 10. Examples of the user setup information are arrangement locations of icons on a menu screen, arrangement locations or types of widgets, a background color of a menu screen, a folder to be initially displayed on a menu screen, etc.

The storage unit 111 is capable of storing policy information used to specifically set a storage area to which reference can be made, for identification information regarding each user. The policy information may be: information for specifically setting data to which reference can be made; or information for specifically setting a storage area of a web server 40, a storage area of a shared server 30, or a storage area of another user's mobile terminal to which reference can be made. More specifically, the policy information may map identification information with information regarding a condition as to whether reference can be made to individual files.

A controller 112 is capable of controlling the components in the image forming device 10.

A printing unit 113 is capable of performing a printing process with a print medium, based on the print data. Alternatively, the printing unit 113 is capable of: laying out print pages in assigned print areas; and printing the pages. The printing unit 113 is also capable of printing photographic image data edited by the photographic image data editor 108.

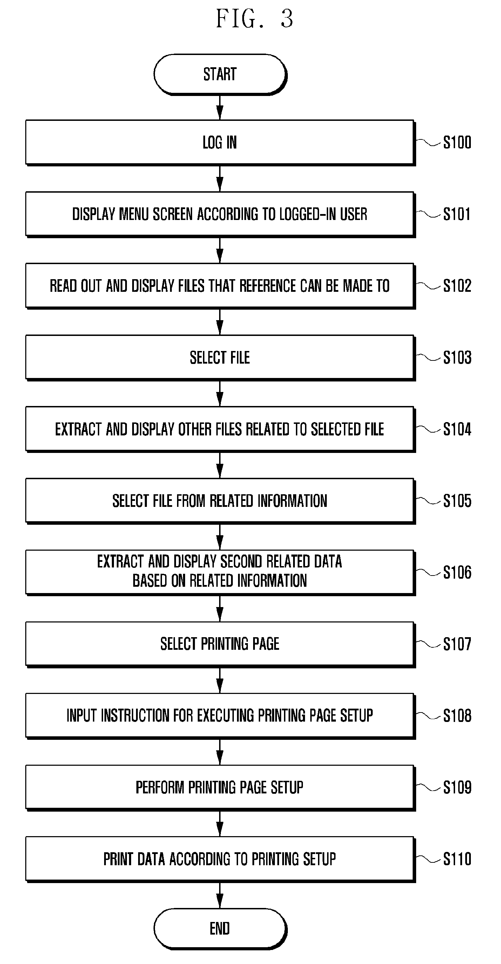

The following description provides an image forming method of the image forming device 10, referring to the flowchart of FIG. 3.

FIG. 3 is a flowchart that describes an image forming method of the image forming device shown in FIG. 1 according to an embodiment of the present disclosure.

Referring to FIG. 3, the authentication unit 109 of the image forming device 10 performs a log-in process at operation S100. The display unit 102 (also referred to as a touchscreen) displays a log-in screen. When a user holds his/her RFID card close to the touchscreen or places his/her RFID card on the touchscreen, the readout unit 110 reads out identification information from the RFID card. The authentication unit 109 compares the readout identification information with identification information regarding an object to authenticate, stored in the storage unit 111. When the readout identification information matches with identification information regarding an object to authenticate, the authentication unit 109 allows for the authentication and performs a log-in process. On the other hand, when the readout identification information does not match with identification information regarding an object to authenticate, the authentication unit 109 does not allow for the authentication, and may display an error message on the touchscreen. In an embodiment, the image forming device may display two areas on the touchscreen, e.g., left and right areas. In this case, the image forming device is capable of: detecting which one of the areas an RFID card is close to or contacts; determining whether the user is a left-handed or right-handed, based on the detected area; and displaying a menu screen corresponding to the ascertained user. For example, when an RFID card is close to or contacts the left area, the image forming device 10 is capable of displaying a menu screen for a left-handed user. Similarly, when an RFID card is close to or contacts the right area, the image forming device 10 is capable of displaying a menu screen for a right-handed user. The menu screen for a left-handed user may be displayed in such a way that a menu button is displayed on an area (e.g., the end of the right side) on the touchscreen. The menu screen for a right-handed user may be displayed in such a way that a menu button is displayed on an area (e.g., the end of the left side) on the touchscreen.

When the user logs in, the controller 112 reads out your set setup information corresponding to identification information of the logged-in user, referring to the storage unit 111, and displays the menu screen set by the user setup information at operation S101. For example, the controller 112 may display icons that enable the image forming device to access the mobile terminal 20, shared server 30, and web server 40, which have been authenticated to be attached to the network 50. Alternatively, the controller 112 is also capable of displaying: functions of the image forming device 10, which the logged-in user has frequently used; widgets that the logged-in user has arranged as he/she like; etc.

When the menu screen is displayed, the acquisition unit 101 is capable of specifying files that reference can be made, based on the identification information of the logged-in user and the policy information stored in the storage unit 111, and displaying the files that reference can be made to on the touchscreen at operation S102. For example, the acquisition unit 101 is capable of reading out at least one file that reference can be made to from the mobile terminal 20, shared server 30, web server 40, etc., according to the policy information, and displaying the file on the touchscreen.

The controller 112 is capable of detecting a selection (e.g., a touch input) of a file to print from among the files displayed on the touchscreen at operation S103. When a file to print is selected, the acquisition unit 101 searches for (extracts) files related to the selected file from the policy information, within a range that reference can be made. The controller 112 displays the searched files, as related information (first related information), on the touchscreen at operation S104. The file may be stored, along with the attribute information, such as a file producer, a storing site of data (a user's terminal, a cloud server, a shared server, etc.), identification information of a user or a group which has the right of access, a production date, information regarding members who can share files, feature information regarding an image (if the image is contained in the file), the use frequency, etc. The controller 112 searches another user's mobile terminal 20, a shared server 30, and a web server 40 for another file matching with the attribute information of the currently selected file, and displays the searched file, as related information, on the touchscreen. The controller 112 is capable of searching for files which match with the currently selected file, in terms of all or part of items of the attribute information. Alternatively, the controller 112 is capable of searching for related information, based on a string, as a keyword, contained in the selected file. The controller 112 is also capable of recognizing an image contained in the selected file and searching for information related to the recognized image. When the selected file contains a keyword such as ┌printer┘, ┌print paper┘, etc., the controller 112 is capable of searching for related information corresponding to the keyword. In addition, when the controller 112 detects a face of a specific person (e.g., a sport player) from an image contained in the selected file using a facial recognition function, etc., it is capable of obtaining information related to the person (e.g., a sport player), such as a game result, a date of the next game, information regarding other players in the team that the sport player belonged to, etc. Alternatively, the user may extract particular information as related information. For example, the user may: access a particular storage area, using icons displayed in the top portion of a recommended area at the right side of the screen; set a corresponding file; and extract related information from the file.

The controller 112 is capable of detecting a selection (e.g., a touch input) of a file from among the displayed, related information at operation S105. The selected file may be displayed on the touchscreen. When another file has been already displayed, it may also be displayed along with the file selected from among the related information. In addition, the files may be re-arranged and displayed, e.g., side-by-side, according to a drag action.

When the acquisition unit 101 extracts (searches for) second related information related to the selected, related information, the controller 112 is capable of displaying the searched, second related information on the touchscreen at operation S106. The second related information may be searched using attribute information in a similar way as the first related information is searched. When the displayed, first or second related information is configured to be in layers, the controller 112 may also display files at lower layers according to a touch action.

The input unit 103 receives a user input selecting a print page from among the displayed files at operation S107. For example, when the controller 112 detects, via the input unit 103, a pre-defined input (e.g., a long touch applied to the touch screen for over a period of time) applied to a page of a file containing a print page, it is capable of displaying checkboxes in individual pages of each file. The user may select print pages by touching corresponding checkboxes. When other files also have print pages, the controller 112 is capable of receiving inputs selecting the print pages in the files.

When the user has selected print pages and touches a button for executing (performing) the print page setup, the input unit 103 receives the print page setup executing input at operation S108. The controller 112 performs the print page setup according to the print page setup executing input at operation S109. For example, the controller 112 receives settings related to the print page setup input by the user, thereby performing the print page setup. When the print page setup has been completed, the print data creating unit 104 creates print data, as print pages are arranged according to the settings of the print page setup. The printing unit 113 prints the created, print data on a print medium at operation S110.

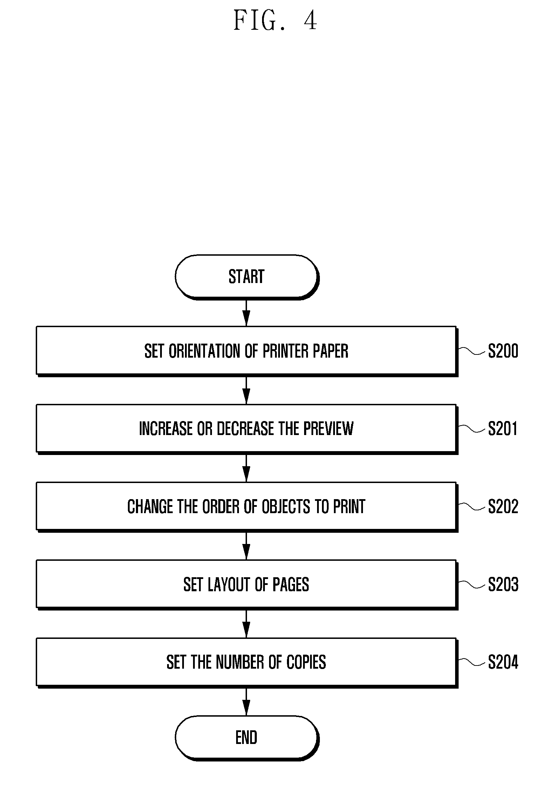

In the following description, the print page setup process in operation S109 of FIG. 3 is explained in detail, referring to the flowchart of FIG. 4.

FIG. 4 is a detailed flowchart that describes a print page setup process of the method referring to FIG. 3 according to an embodiment of the present disclosure.

Referring to FIG. 4, when an input for performing (executing) the print page setup is input and an input for setting the orientation of paper, the controller 112 sets the orientation of paper according to the input at operation S200. For example, when the controller 112 displays an image of a paper on the touchscreen and receives an input for tapping two points on the displayed paper image and rotating it, it is capable of rotating the displayed paper image according to the direction and amount of rotation. For example, when the controller 112 displays an image of A4 size paper in portrait, and then receives an input for rotating the paper, it is capable of displaying the paper image in landscape and setting the landscape orientation as an orientation of the print paper. When the controller 112 sets the orientation of the print paper, and then receives an input for additionally changing the orientation of the print paper, it is capable of changing the orientation of the print paper according to the additional input.

When the controller 112 displays a print preview screen and then receives gestures for increasing or decreasing the size via the input unit 103, it is capable of increasing or decreasing the size of the preview screen according to the received gestures at operation S201. For example, when the controller 112 receives an increasing instruction (gesture), it increases the preview screen in size and displays it. For example, when the controller 112 detects a first type of gesture (e.g., a stretch input), it is capable of increasing the size of print pages according to the input amount of first type of gesture, so that only one print page can be displayed on the screen. When the controller 112 detects a second type of gesture (e.g., a pinch input), it is capable of decreasing the size of print pages according to the input amount of second type of gesture, so that all the decreased print pages can be properly displayed on the screen.

The controller 112 is capable of changing the printing order of print pages, according to the instruction for altering (changing) the order of objects to print at operation S202. For example, in a state where the controller 112 displays all print pages in landscape orientation in the printing order, when the user drags and drops one of the print pages from one location to another, the print pages are re-arranged as the dragged and dropped page is placed at the new location. When the user drags and drops a page onto a location where a specific print page has been already located, the controller 112 is capable of moving the dragged and dropped page to a location before the specific print page. The arrangement order of pages refers to the printing order.

The controller 112 sets the layout of pages at operation S203. More specifically, when the controller 112 detects an action (e.g., a swipe, a drag, or the like) of a finger, located at the center portion near the top part of one of the pages, moving on the preview screen from top to bottom, it is capable of arranging two pages, in one sheet of print paper, in landscape orientation. That is, the controller 112 sets the page layout in such a way that two pages are arranged in one sheet of print paper in landscape orientation. It should be understood that the layout of pages can vary depending on the direction or the number of finger's swiping actions.

The controller 112 is capable of setting the number of copies at operation S204. The controller 112 receives the number of copies and sets the number of print pages. For example, when the controller 112 receives two as the number of copies, it controls the printing unit 113 to print two copies for every page.

It should be understood that the order of processes from operations S200 to S204 is not limited to the embodiment shown in FIG. 4. For example, the embodiment may be modified in such a way that one of the processes from S200 to S204 is first performed or parts of the processes are performed, according to user's inputs.

In the following description, examples of a screen displayed by the display unit 102 are explained in detail referring to the accompanying drawings.

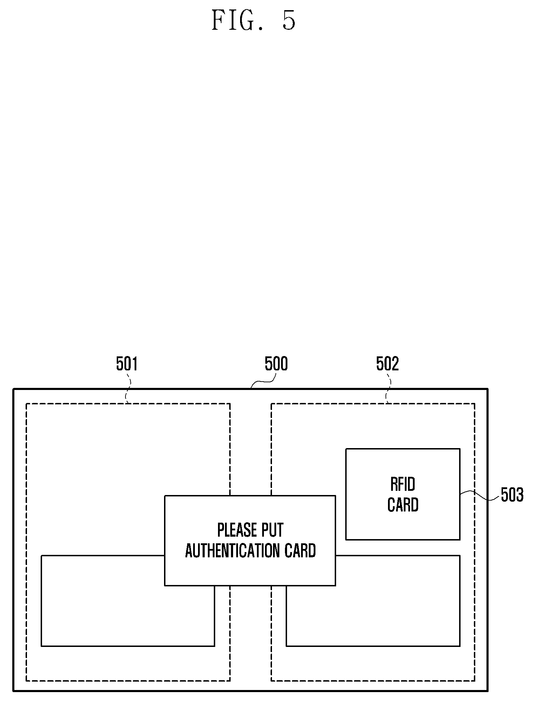

FIG. 5 is a diagram showing a log-in screen displayed on a display unit shown in FIG. 2 according to an embodiment of the present disclosure.

Referring to FIG. 5, the display unit 102 is capable of displaying a message, e.g., ┌Please place an authentication card┘, etc., on a display screen 500. The display unit 102 sets a log-in area (a first log-in area) 501 in the left and a log-in area (a second log-in area) 502 in the right, with respect to the center of the screen. For example, when the user holds an RFID card 503 close to or directly on (contacting) the log-in area 502, the readout unit 110 reads out identification information stored in the RFID card 503 close to or directly on the log-in area 502. The authentication unit 109 performs authentication based on the readout identification information, and simultaneously detects (or recognizes) an object logged-in via the log-in area 502. Therefore, the menu screen is displayed, based on identification information and an object logged-in via the log-in area 502. When the RFID card 503 is close to or contacts the log-in area 501, the authentication unit 109 performs authentication, based on identification information that the readout unit 110 reads out from the log-in area 501. In this case, the display unit 102 displays a menu screen, based on identification information and the logged-in object from the log-in area 501. For example, when the user is logged-in via the log-in area 501 arranged in the left of the display screen, it is likely for the user to be a left-handed person. In this case, the display unit 102 is capable of displaying a menu screen for a left-handed person. Similarly, when the user is logged-in via the log-in area 502 arranged in the right of the log-in screen, it is likely for the user to be a right-handed person. In this case, the display unit 102 is capable of displaying a menu screen for a right-handed person. As described above, the embodiment of the present disclosure is capable of displaying menu screens depending on types of logged-in area.

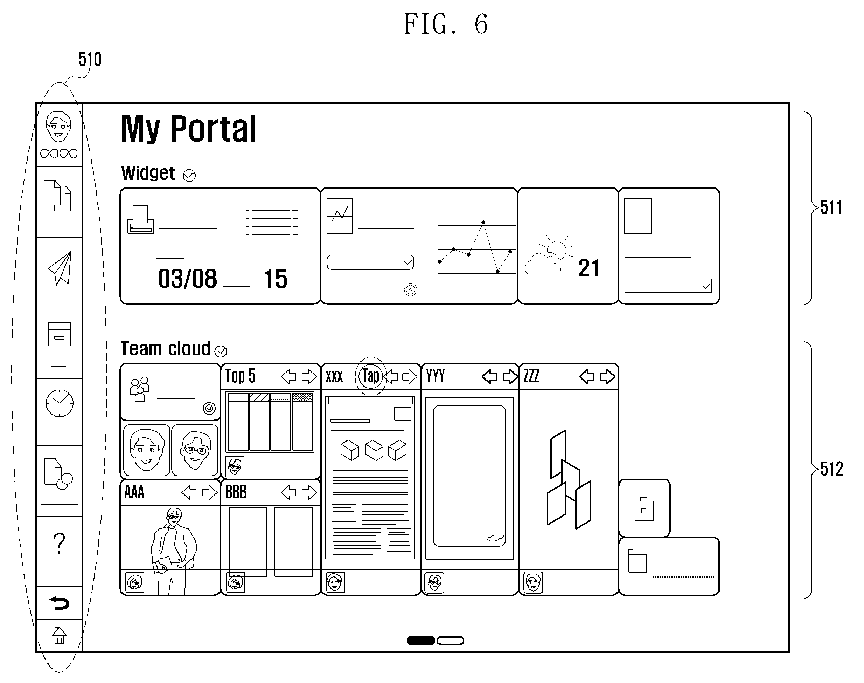

FIG. 6 is a diagram showing a menu screen displayed on a display unit shown in FIG. 2 according to an embodiment of the present disclosure. The display unit displays a menu screen based on a log-in area that an RFID card is close to or contacts and the authenticated identification information. For example, an arrangement location of an icon, a background color, folders, etc. are displayed on one side of the menu screen, according to user setup information corresponding to identification information regarding a logged-in user. For example, the menu screen displays: a main menu display area 510, showing a main menu, on the left edge; a widget display area 511, showing widgets and printing functions of an image forming device which are frequently used by the user, on the top portion; and a shared area 512, showing files or folders which can be shared with users as well as the logged-in user, on the bottom portion.

Referring to FIG. 6, for example, according to a user's settings, the display unit 102 may display, on one side of the menu screen, folders of a shared server 30 that is shared between groups of members of a company, a cloud server (or a web server 40), a mobile terminal 20 used by an authenticated user, etc. The display unit 102 may also display, on one side of the menu screen, folders of a shared server 30 that is shared with other users, a cloud server (or a web server 40) that is shared between other members, etc.

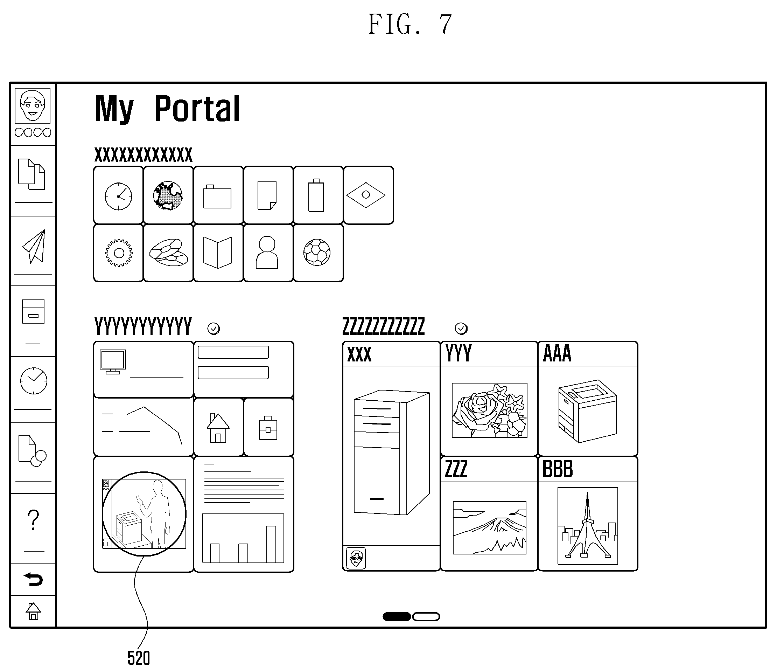

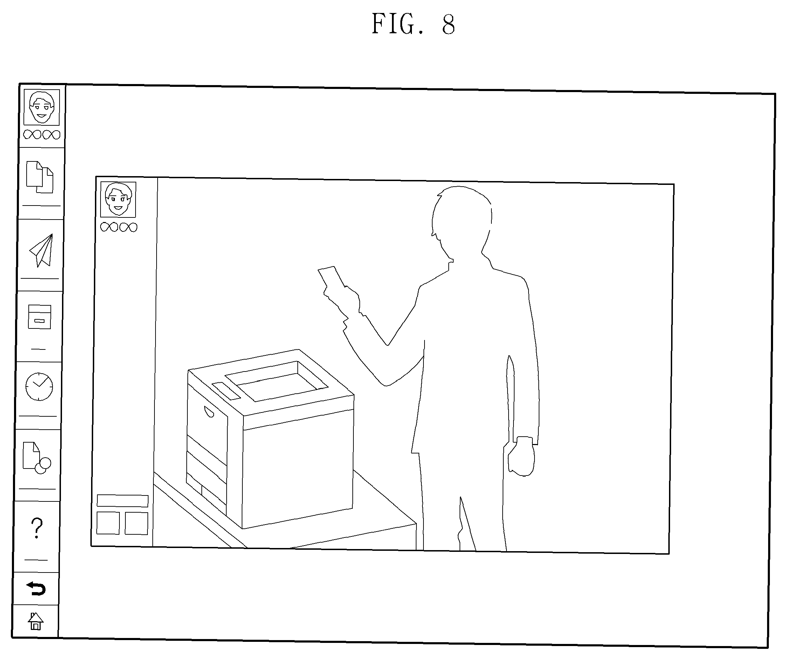

FIG. 7 is a diagram showing a screen on which content stored in a logged-in user's mobile terminal is displayed according to an embodiment of the present disclosure, and FIG. 8 is a diagram showing a screen on which selected content is displayed according to an embodiment of the present disclosure.

Referring to FIGS. 7 and 8, when the mobile terminal 20 receives a pre-defined touch gesture (e.g., a swipe gesture) to the menu screen shown in FIG. 6, content (e.g., files or folders) stored in the mobile terminal 20 is displayed on the display unit 102 shown as in FIG. 7. The content stored in the mobile terminal 20 may be displayed in preview images (e.g., thumbnails). When content 520, located at the bottom left on the screen, is selected as shown in FIG. 7, the selected content 520 is read out from the mobile terminal 20 and displayed on the entire screen as shown in FIG. 8.

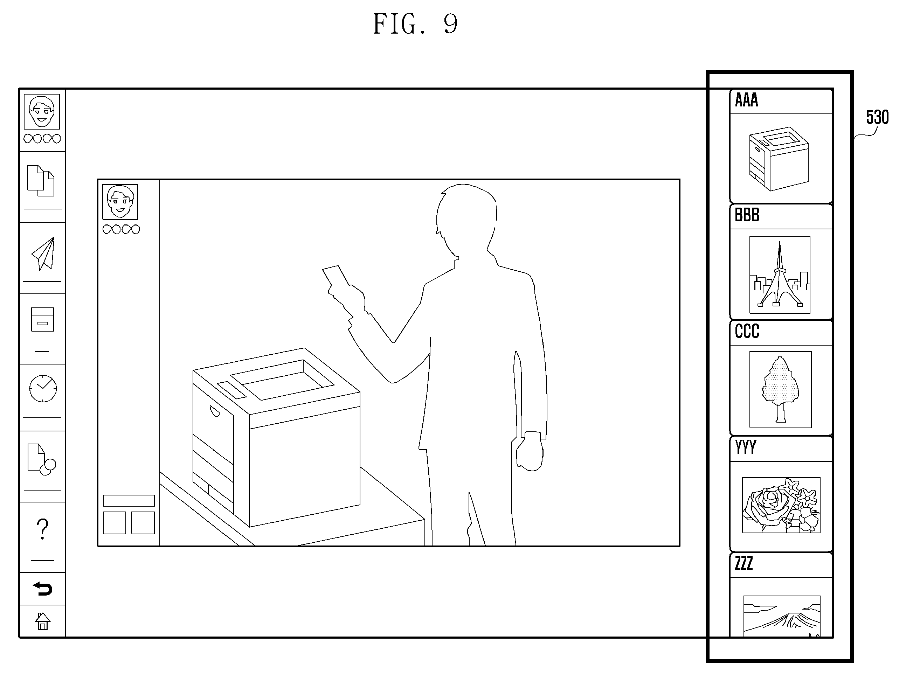

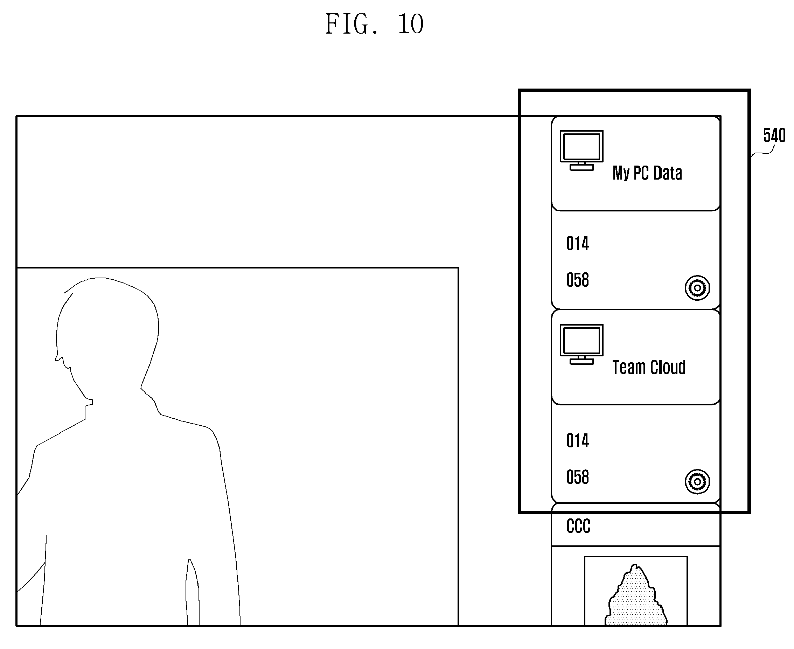

FIG. 9 is a diagram showing a screen on which related information is displayed according to an embodiment of the present disclosure, and FIG. 10 is a diagram showing a screen whose display area displays related information according to an embodiment of the present disclosure.

Referring to FIGS. 9 and 10, when content selected by a user is displayed on the screen as shown in FIG. 8, the controller 112 searches for related information (first related information) and displays the searched, related information on the right side of the screen 530, as shown in FIG. 9. When related information contains a number of items, the controller 112 may array and display related information items in the vertical direction (portrait). When the user moves (e.g., scrolls) the related information in the vertical direction (e.g., from top to bottom), the controller 112 is capable of displaying icons 540 that the user uses to access his/her mobile terminal 20, a shared server 30, a web server 40, etc., as shown in FIG. 10. When the user touches one of the icons, files, stored in the mobile terminal 20, shared server 30, web server 40, etc., may be further displayed on the screen, in addition to the currently displayed files.

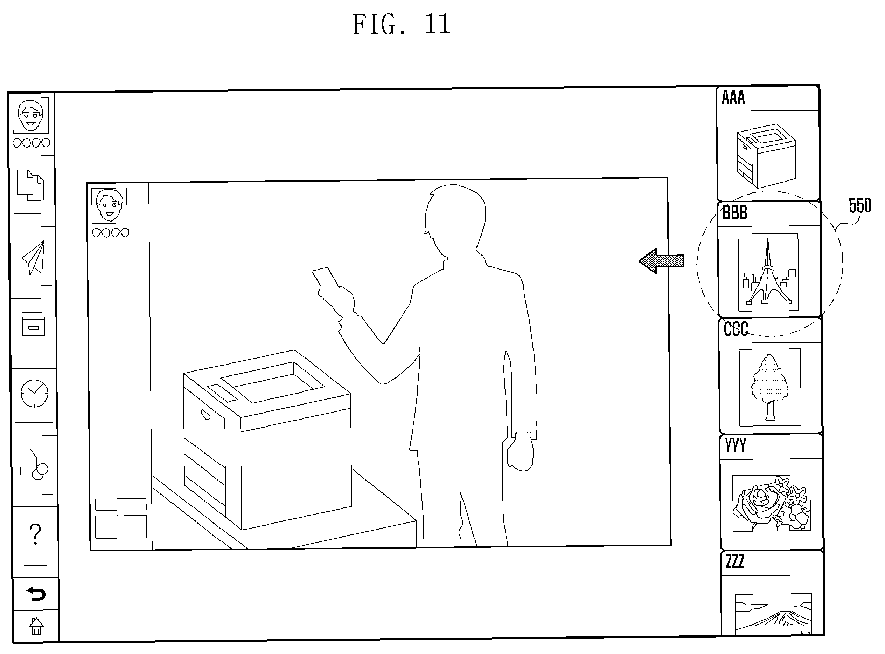

FIGS. 11 to 15 are diagrams showing screens to describe when related information is selected according to an embodiment of the present disclosure.

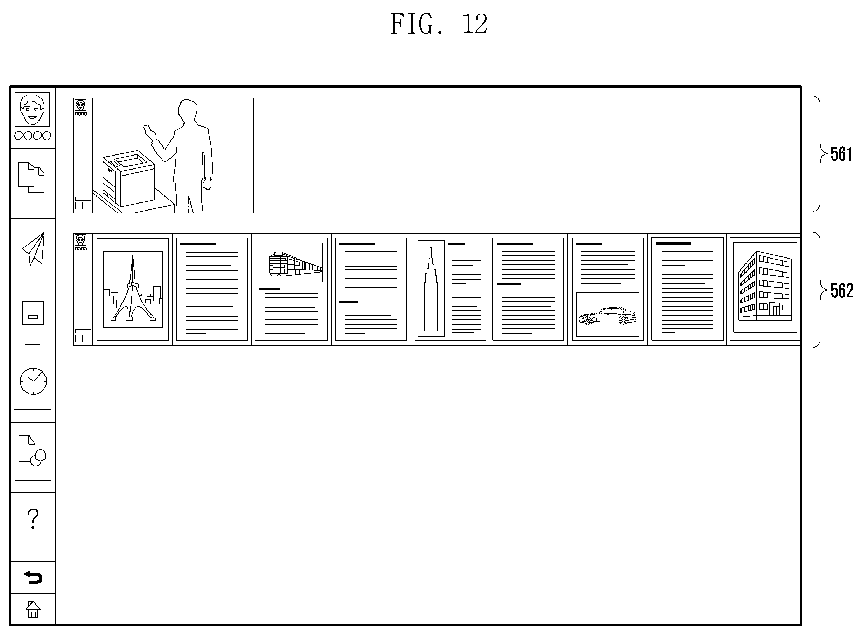

Referring to FIGS. 11 to 15, when the user selects the second related information 550 from the top from among the related information items displayed on the right side of the screen, e.g., when the user moves (e.g., drags or swipes) the related information to the left on the screen, the controller 112 is capable of arraying and displaying individual pages 562 of the selected related information below the content 561 on the screen as shown in FIG. 12.

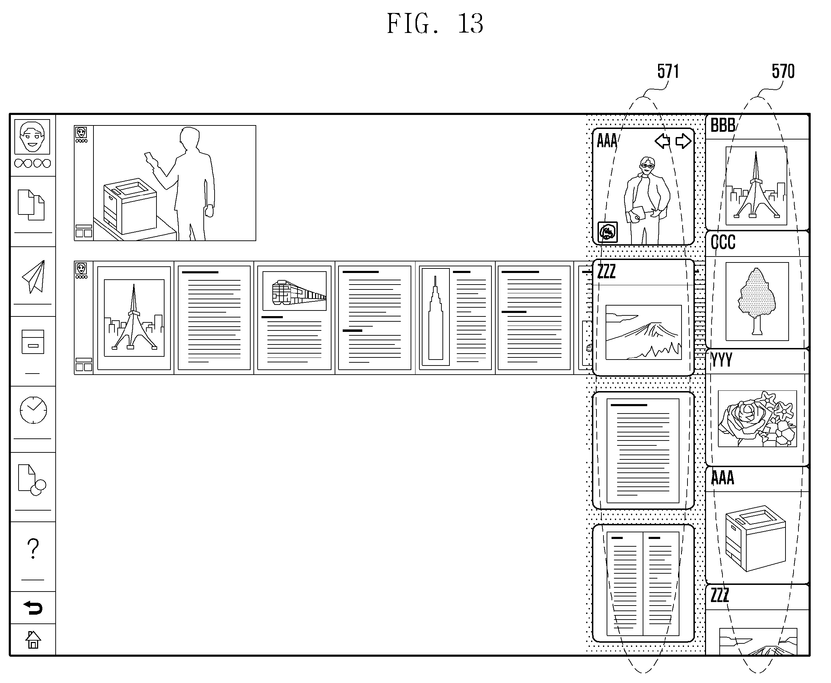

When the selected related information is displayed, the acquisition unit 101 is capable of searching for related information, related to the selected, related information, and acquiring the searched, related information as second related information. The controller 112 is capable of displaying the second related information 570 on the right side of the screen as shown in FIG. 13. When one content item is selected (e.g., touched) from the content items displayed as the second related information, and the selected content item is formed in layer, the controller 112 is capable of displaying the lower layer content 571, by the side (e.g., left) of the second related information 570, side-by-side, as shown in FIG. 13.

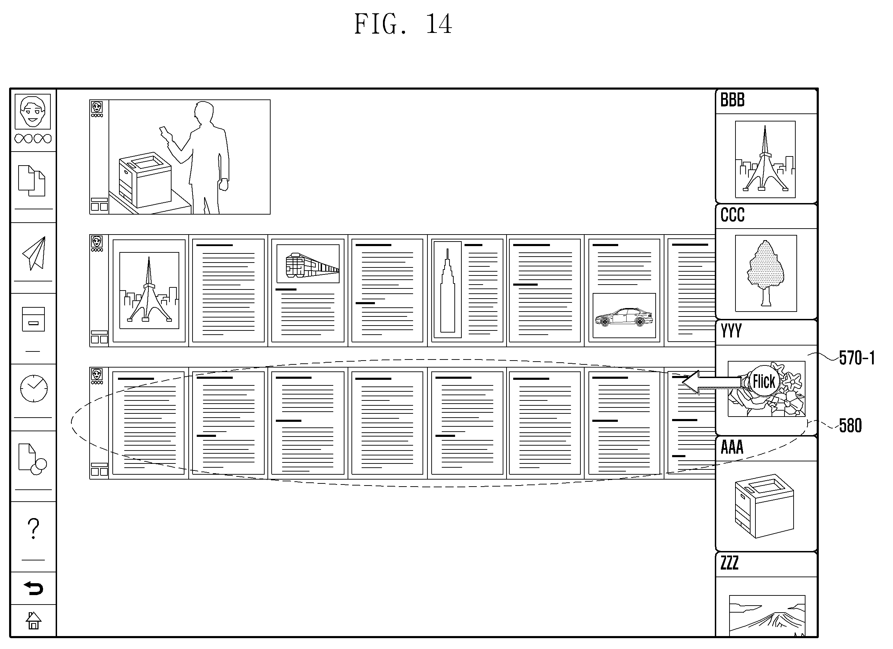

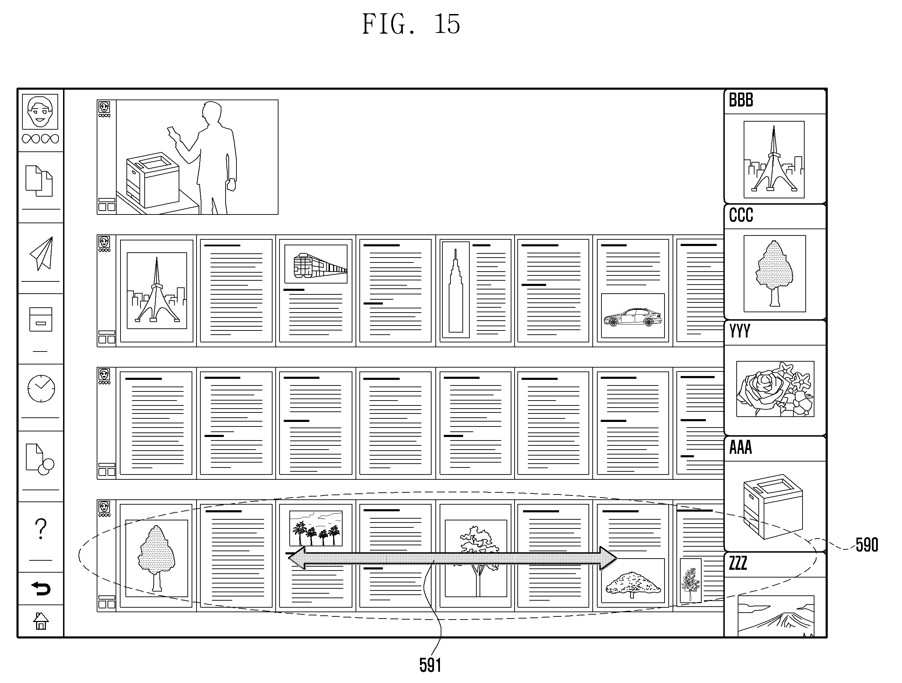

When the user selects specific related information 570-1 from among the second related information 570, e.g., when the user moves (e.g., drags or swipes) the specific related information 570-1 to the left on the screen, the controller 112 is capable of arraying and displaying the selected, specific related information 570-1 below the content 580 on the screen as shown in FIG. 14. Each time that another file, related information, second related information, etc., is selected, the controller 112 is capable of displaying the selected, other file, related information, second related information, etc., indicated by reference number 590, on the screen as shown in FIG. 15. Individual pages contained in the content (e.g., a file) may be arrayed and displayed, in landscape orientation, on the screen. When all the arrayed pages are not displayed in the screen at once, the user may drag of flick on the screen, so that other pages 591, which have not been displayed, appear on the screen as shown in FIG. 15.

When the user applies a zoom in/out action to one of the pages on the screen, the controller 112 increases or decreases the page according to the action.

When the user applies a long touch to an icon attached to the first page of a file, the controller 112 changes the arrangement of the file and other files in the vertical direction and displays print pages.

As described above, various embodiments of the present disclosure array and display individual print pages according to content items (files) containing the print pages on the screen, so that the user can separately select print pages contained in a number of content items (files) on the screen, while viewing the content items and the print pages.

Individual content items shown in FIG. 15 may have different file formats. For example, unlike a general print job performed in such a way that a printer: receives only data to print from computers, such as a PC, etc.; or coverts the format of the data into another format easy to print (e.g., bitmap, etc.) and then receives the converted data, the image forming device 10 according to embodiments of the present disclosure reads out data by content items and displays the data on the display unit 102. For example, the embodiment of the present disclosure is capable of arraying and displaying: a file created by word processing software, a file by illustration software, a file by spreadsheet software, a photo data file, etc., in portrait orientation; and simultaneously individual pages contained in each of the files in landscape orientation, on in a single screen. In this case, the image forming device 10 is capable of copying content from individual storage areas storing corresponding content and storing the copied content.

In an embodiment, when copying of content has been set to 'not allowed,' in terms of security settings, the image forming device 10 fetches content from computers. Therefore, the embodiment of the present disclosure is capable of operating so that only one file exists.

In an embodiment, the image forming device 10 displays related information, thereby providing a user with files related to files that the user decided to use. Therefore, the embodiment is capable of allowing the user to further select other files that he/she is likely to use, from the related information, as well as files that he/she has originally decided to use. The embodiment is also capable of allowing the user to easily select files to print using the image forming device 10 without requiring the user to return to the place where a print control device is placed.

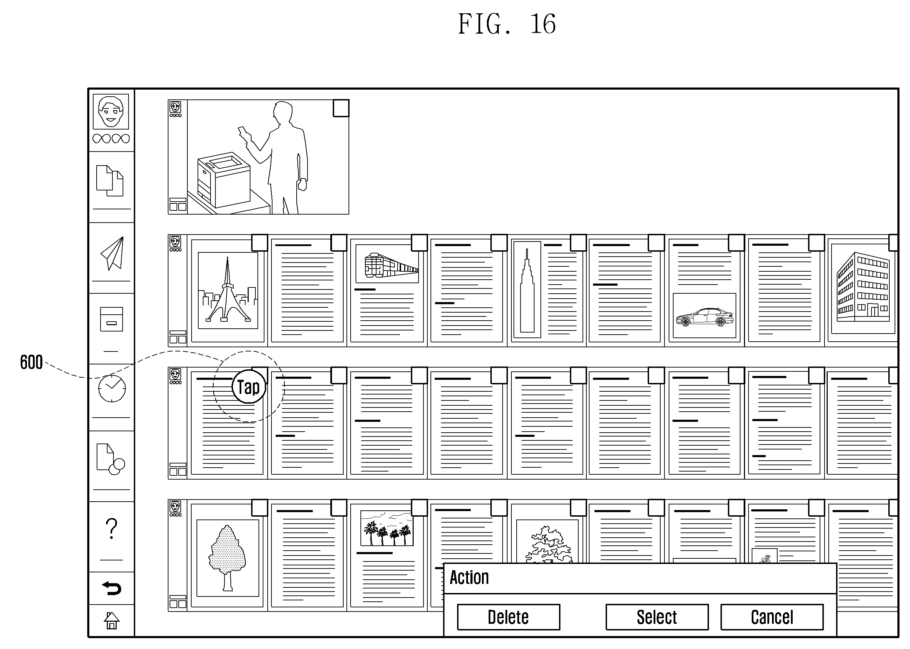

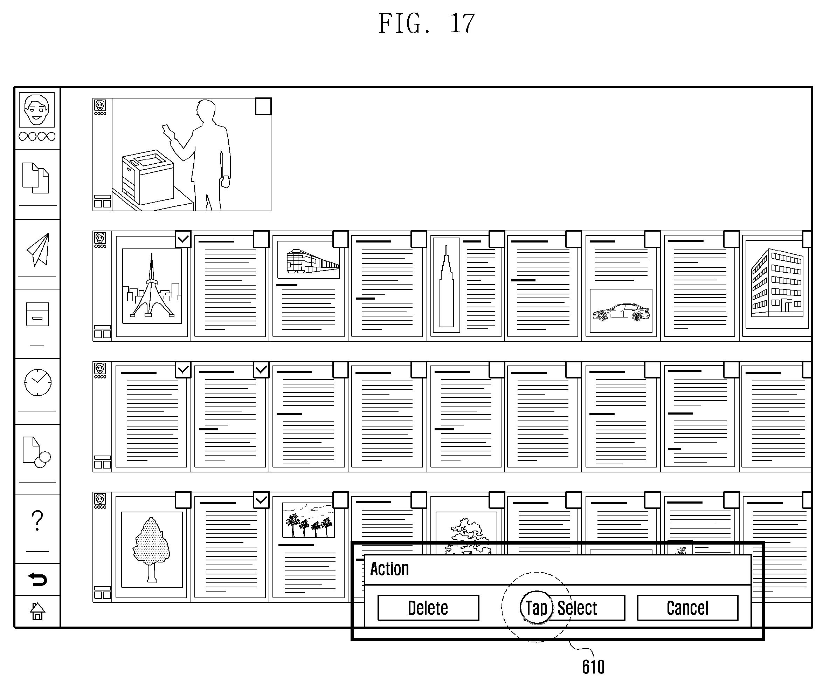

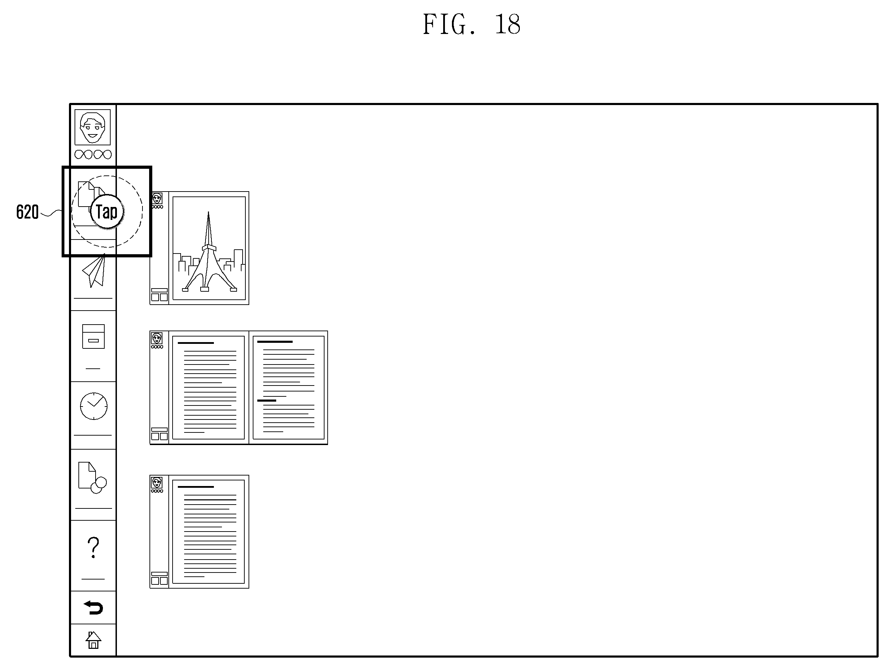

FIG. 16 is a diagram showing a screen when a page as an object to be printed is selected according to an embodiment of the present disclosure. FIG. 17 is a diagram showing a screen on which a print page setup menu is displayed according to an embodiment of the present disclosure. FIG. 18 is a diagram showing a screen when an icon for initiating a print page setup is touched according to an embodiment of the present disclosure.

Referring to FIGS. 16 to 18, when a pre-defined touch input (e.g., long touch) is detected on one of the pages on the screen shown in FIG. 15, individual pages of each of the files are displayed with a checkbox as shown in FIG. 16. The checkbox is selected by the user to show whether each page is a print page. When the user touches a checkbox 600 as shown in FIG. 16, the controller 112 sets the page as a print page and simultaneously contains a tick mark in the checkbox to indicate that the page is a print page. It should be understood that the user may select pages in one or more files as print pages. When the user selects at least one page, the controller 112 is capable of displaying a print page setup menu 610 for setting the selected print page as shown in FIG. 17. The print page setup menu includes: a deletion menu, Delete, for deleting a checked page; a selection menu, Select, for selecting a checked page as a print page; and a cancel menu, Cancel, for cancelling the selection (checking).

When the user touches a selection menu of the print page setup menu, the controller 112 only displays selected pages, or pages with a tick mark, on the screen. That is, the controller 112 does not display non-selected pages, or pages without a tick mark. When the user touches an icon 620 for starting a print page setup, located at the left side end (edge) of the screen, as shown in FIG. 18, the controller 112 switches the screen into a print page setup screen.

As described above, the embodiment of the present disclosure is capable of: displaying a number of content items simultaneously, so that the user can select corresponding pages; integrating the selected pages into a single matter as print data; and printing it.

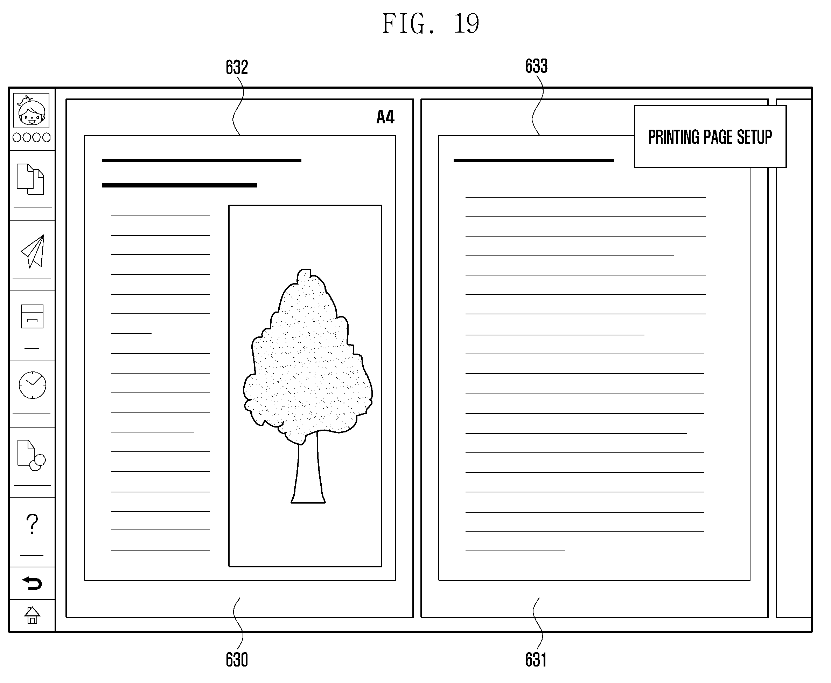

FIG. 19 is a diagram showing a screen for print page setup according to an embodiment of the present disclosure.

Referring to FIG. 19, the print page setup screen displays a print preview screen on which printer pages 630 and 631 and print pages 632 and 633 on the printer pages 630 and 631 are laid out respectively. For example, print pages 632 and 633 are laid out within the printer pages 630 and 631. Although the embodiment shown in FIG. 19 is described in such a way that printer pages 630 and 631 are set to A4 size by default, it should be understood that printer pages may set to any other size, e.g., A3, B5, B4, etc. When the user applies a movement touch (e.g., a drag touch, a swipe touch) to the screen, printer pages that have not been shown appear on the display unit 102.

In the embodiment of the present disclosure, since the display unit 102 is designed to have a screen size capable of displaying an A3 page in actual size, although printer pages set their printing size to A3, A4, B5, etc., the image forming device 10 can virtually display print images of the printer pages, in a set, printing size, on the screen. Therefore, the user can preview the print result on the screen before printing.

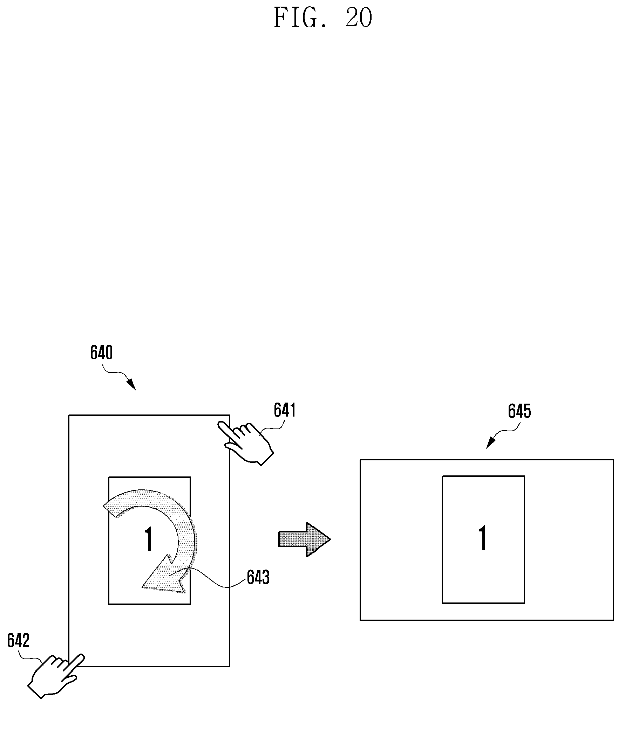

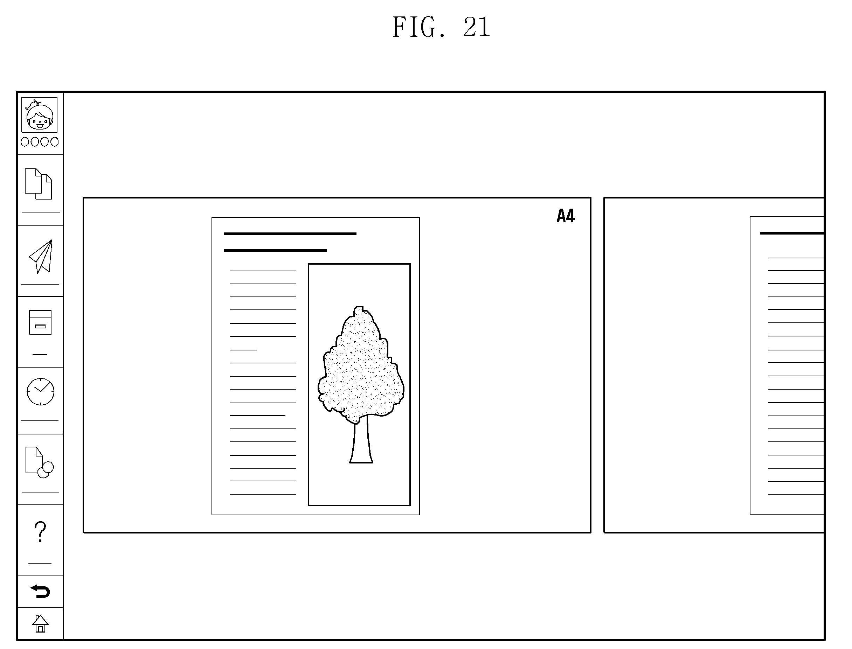

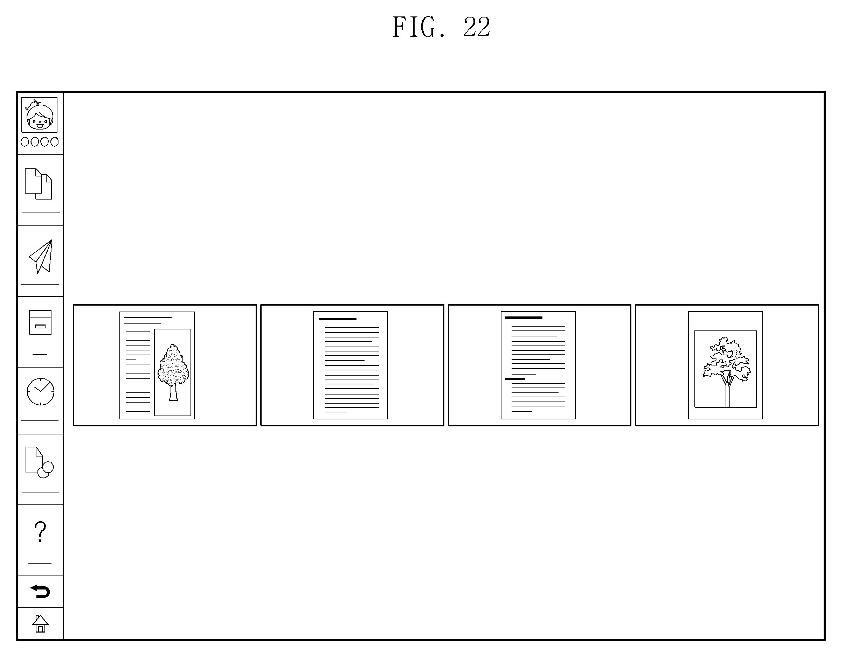

FIG. 20 is a diagram that describes a case when the orientation of the printer page is changed according to an embodiment of the present disclosure. FIG. 21 is a diagram showing a preview screen where the printer page is laid out in landscape and a print page is laid out in portrait according to an embodiment of the present disclosure. FIG. 22 is a diagram showing a preview screen displaying multiple printer pages in thumbnail view according to an embodiment of the present disclosure.

Referring to FIGS. 20 to 22, when the user applies an action 643 to the a printer page in such a way as to rotate it with touching two points 641 and 642, with respect to the center of the printer page, the layout editor 106 rotates the printer page according to the rotation direction. More specifically, in a state 640 where the print page in portrait is laid out on the printer page in portrait, when the user performs the action 643 for changing the orientation of printer page on the screen, the printer page changes the orientation from portrait to landscape as shown in diagram 645. When an instruction for changing the orientation of printer page is applied to the screen, the controller 112 is capable of displaying the print page in portrait laid out in the printer page in landscape on the screen as shown in FIG. 21. As described above, the embodiment of the present disclosure allows a user to intuitively set (or alter) the layout of printer pages with the fingers on the screen of the display unit 102, while viewing the layout orientation of a print page, thereby improving user convenience.

The embodiment of the present disclosure allows a user to apply an increase or decrease action (a zoom in or out action) to the preview screen. For example, when the user applies an action for decreasing in display size to the preview screen as shown in FIG. 21, the controller 112 decreases the preview screen in display size. When the user applies an action for decreasing in display size to the preview screen as shown in FIG. 21, the controller 112 is capable of displaying four printer pages on the screen as shown in FIG. 22. In this case, the controller 112 is capable of displaying the printer pages in the printing order from first to last from the left of the screen.

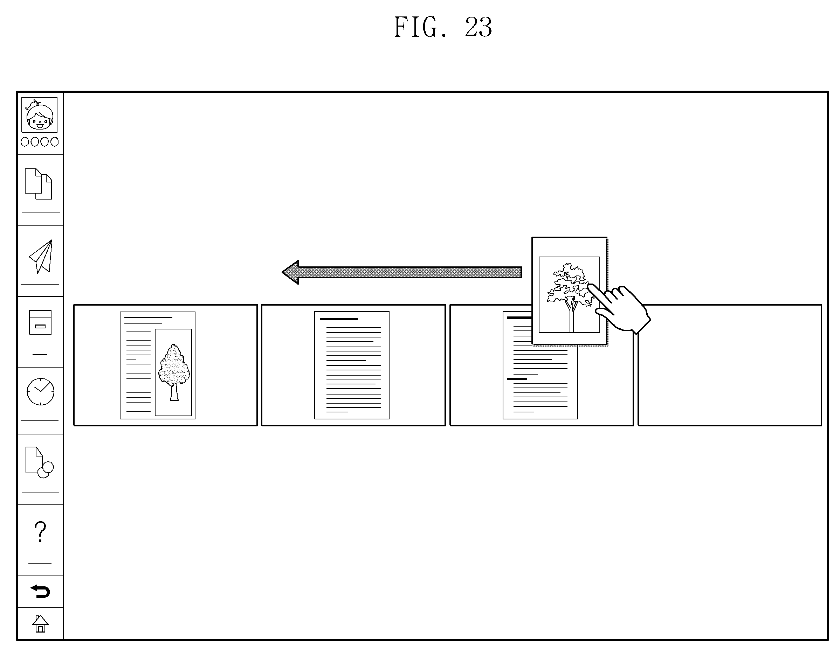

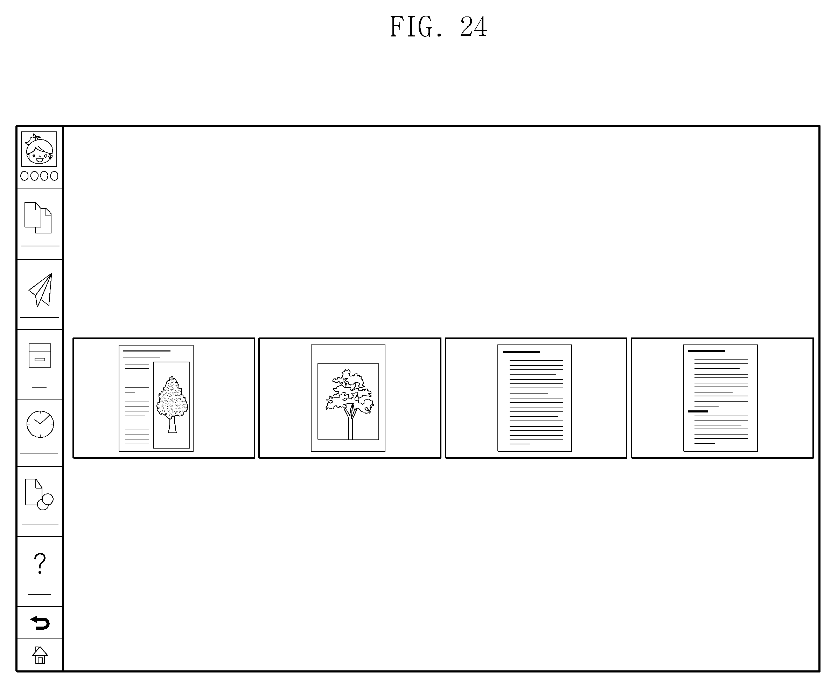

FIGS. 23 and 24 are diagrams that describe a case when the printing order of a print page is changed according to an embodiment of the present disclosure.

Referring to FIGS. 23 and 24, when the user drags and drops one of the print pages from a location to another on the print preview screen shown in FIG. 21 or 22, the printing order of the print pages is changed. For example, when the user drags and drops one of the four print pages in corresponding printer pages from the last printer page (or the most right printer page) onto the second printer page in order from left to right on the screen, the dragged and dropped, last print page is behind the first print page or located behind the first printer page, with the re-arrangement of the printing order. Accordingly, the original second and third print pages are re-arranged and displayed in printing order of third and fourth print pages on the screen as shown in FIG. 24. Although the embodiment shown in FIGS. 23 and 24 describes a case where a print page is moved, it may be modified in such a way that the print page may also be moved along with the printer page and thus the printing order is changed.

As described above, the embodiment of the present disclosure allows a user to easily change the printing order of print pages, with simple actions such as a drag action, a drop action, etc., on the print preview screen, while viewing the layout of print pages (or the printing order), thereby improving user convenience.

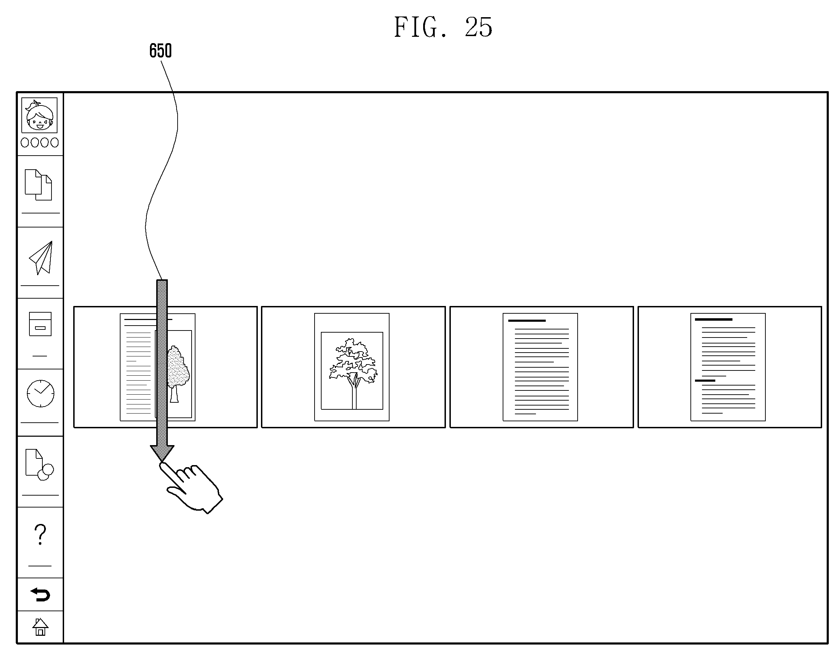

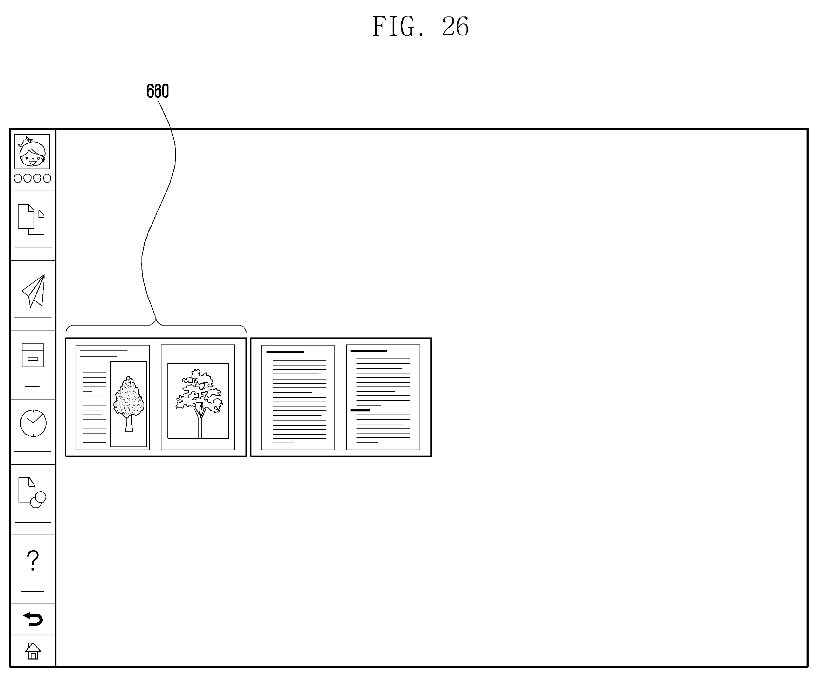

FIGS. 25 and 26 are diagrams that describe a method of altering the layout of printer pages according to an embodiment of the present disclosure.

Referring to FIGS. 25 and 26, the embodiment of the present disclosure is set in such a way that one print page is assigned to one printer page by default. When the user applies an action crossing one printer page from one end (edge) to another end in a default state, the page splitting editor 105 changes the setup to increase the number of print pages on one printer page in response to the input action, and simultaneously determines the splitting location and/or splitting direction according to the direction of the input action. For example, when detecting an action input 650 for crossing the printer page in the portrait orientation, the page splitting editor 105 arrays and displays two print pages in portrait within one printer page in landscape as shown in diagram 660 of FIG. 26. The page splitting editor 105 is capable of applying the same setting to the other printer pages as shown in the diagram 660, and removing printer pages without a print page from the screen. Since each of the printer pages is assigned two print pages as shown in FIG. 26, two of the four printer pages with print pages are displayed; however, the other two printer pages without print pages are removed from the screen, compared with the screen shown in FIG. 25.

As described above, the embodiment of the present disclosure allows a user to set the layout of printer pages with his/her gestures. That is, the embodiment of the present disclosure allows a user to set the layout of printer pages, with simple actions, easily, intuitively.

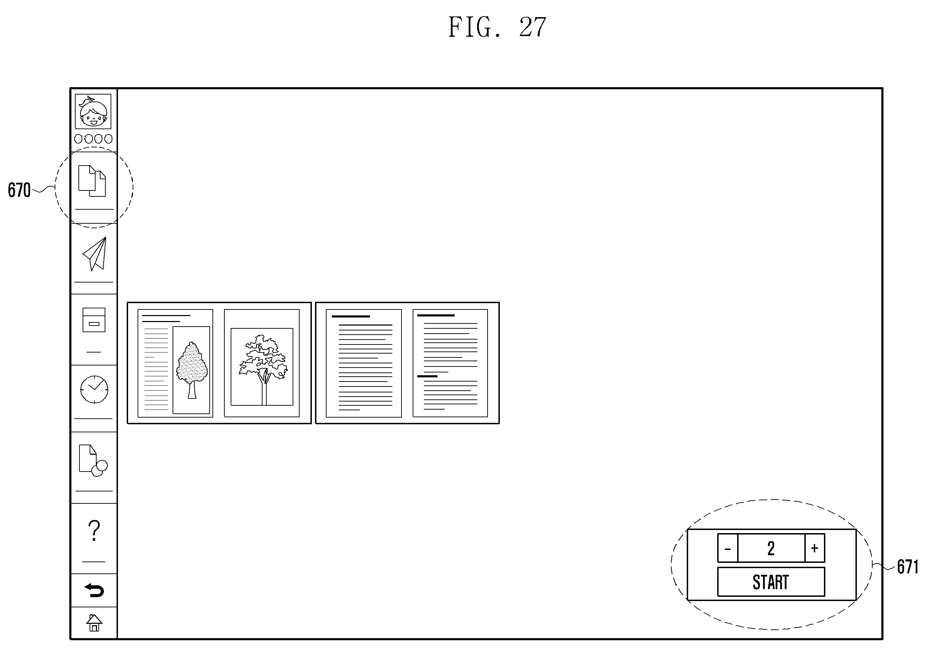

FIG. 27 is a diagram showing a screen for setting the number of copies according to an embodiment of the present disclosure.

Referring to FIG. 27, when the user touches an icon 670 for starting a print page setup, the controller 112 is capable of displaying a copy number setting menu 671 for setting the number of copies on one side of the screen (e.g., the bottom right side of the screen). When the user manipulates a button (+, -) for increasing or decreasing the number of copies in the menu 671 or inputs a number to the menu 671, the controller 112 determines the number of copies. After that, when the user touches the START button for starting the printing, the print data creating unit 104 creates print data corresponding to the displayed, print images (of the pages), it transmits the data and the number of copies to the printing unit 113. The printing unit 113 prints the received, print data by the number of copies.

In the following description, modifications from the embodiments are explained in detail referring to the drawings.

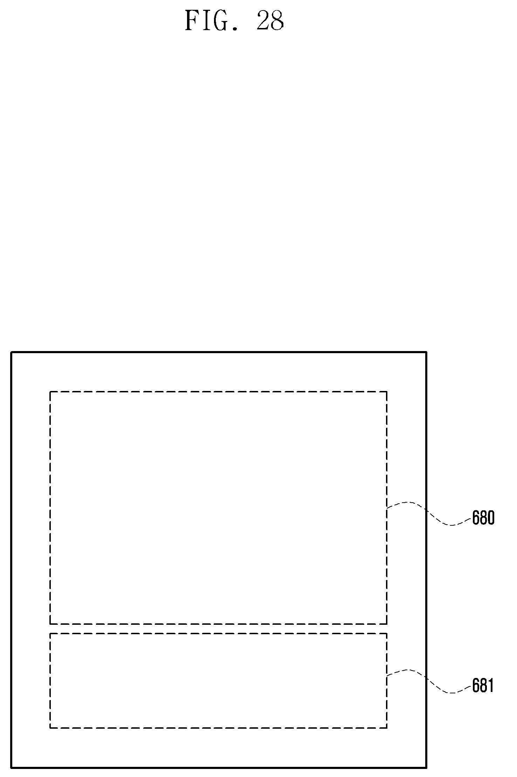

FIG. 28 is a diagram that describes another example of a log-in screen according to an embodiment of the present disclosure.

Referring to FIG. 28, compared with the embodiment referring to FIG. 5 where log-in areas are arranged side-by-side on the display screen, the two log-in areas may be arranged top and bottom (vertically) as shown in FIG. 28. For example, a log-in area 680 and a log-in area 681 may be arranged at the top and the bottom, respectively, on the screen of the display unit 102. For example, the log-in area 680 refers to an area set for normal users and the log-in area 681 refers to an area set for children or wheelchair users. When an RFID card is close to or contacts the log-in area 680, the controller 112 is capable of arranging icons or menus according to a screen setup corresponding to identification information of a logged-in user, based on a normal menu screen. In a state where the log-in area 681 is set for children, when an RFID card is close to or contacts the log-in area 681, the controller 112 is capable of arranging icons or menus according to a screen setup corresponding to identification information of a logged-in user, based on a menu screen for children. The menu screen for children is configured to show only simple functions on the front side of the screen (the bottom of the screen), compared with a menu screen for normal users showing various functions. For example, a menu screen for children may be set to show icons corresponding to three functions, e.g., ┌Print┘, ┌Copy┘, and ┌Manuscript Scan┘, so that the functions can only run. In addition, a menu screen for children may be arranged on the front side of the screen (the bottom of the screen), so that children can easily operate the screen.

In a state where the log-in area 681 is set for wheelchair users, when an RFID card is close to or contacts the log-in area 681, the controller 112 is capable of arranging icons or menus according to a screen setup corresponding to identification information of a logged-in user, based on a menu screen for wheelchair users. The menu screen for wheelchair users is configured to show icons of a main menu on the front side of the screen (the bottom of the screen), so that the wheelchair users can easily touch corresponding icons.

The embodiment may allow for one or more users to simultaneously log in the device. For example, when a number of users are simultaneously logged-in, an interrupt use mode or a common use mode may be selected.

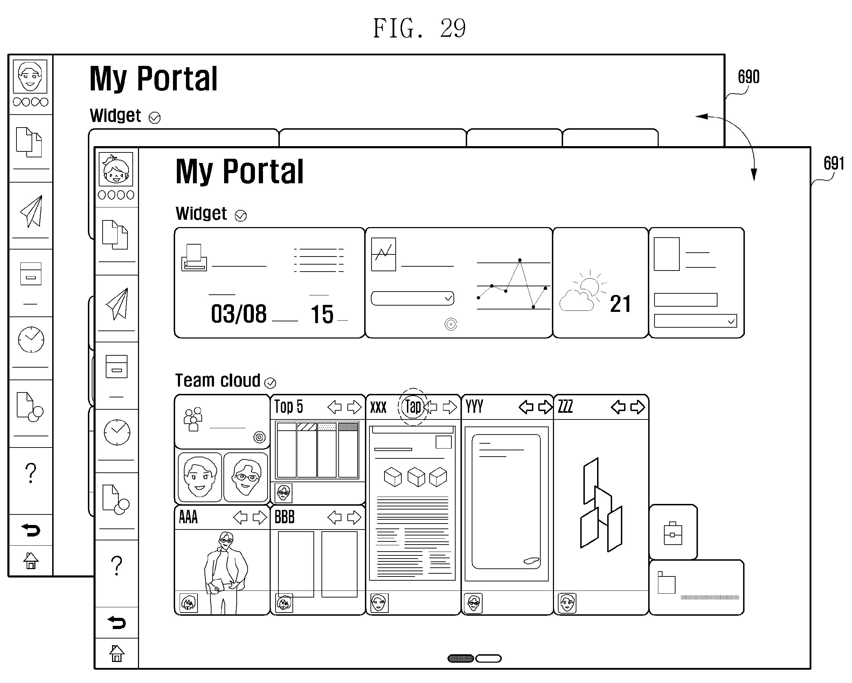

FIG. 29 is a diagram that describes an interrupt use mode according to an embodiment of the present disclosure.

Referring to FIG. 29, the interrupt use mode refers to a mode that allows simultaneously logged-in users to press a screen altering button, thereby switching between screens 690 and 691. For example, in a state where two users have been simultaneously logged in (called first and second logged-in users), the device is capable of storing use environments of the first and second logged-in users, respectively. In this case, the device is capable of switching the screen to a screen as one of the users presses the screen altering button in an interrupt use mode, so that the user can input actions to the screen in his/her use environment.

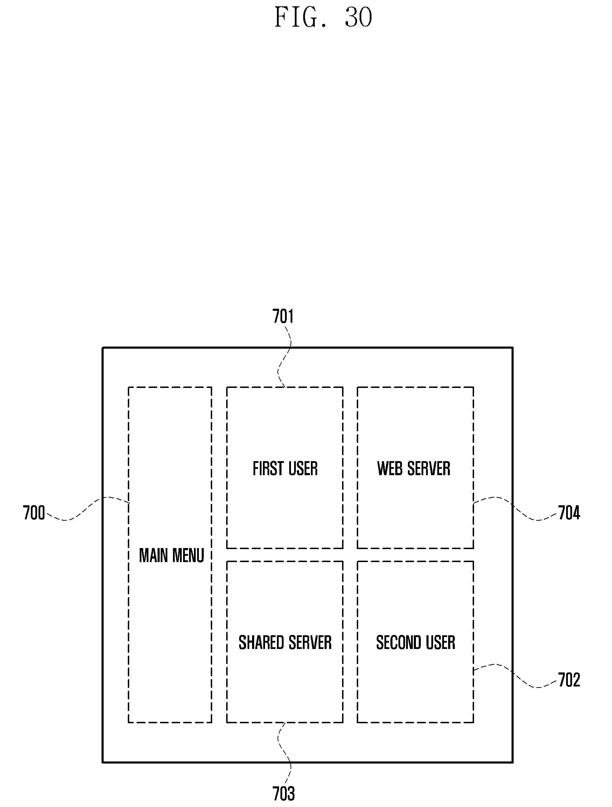

FIG. 30 is a diagram that describes a common use mode according to an embodiment of the present disclosure.

Referring to FIG. 30, the common use mode refers to a mode where menus, files, and folders which can be used by a number of users are displayed on one screen. For example, a screen in a common use mode displays: a main menu 700 on the left end of the screen, an icon 701 for accessing a mobile terminal 20 of a first logged-in user; an icon 702 for accessing a mobile terminal 20 of a second logged-in user; an icon 703 for accessing an area of a shared server 30 that first and second logged-in users can refer to; and an icon 704 for accessing an area of a cloud server (e.g., web server 40) that first and second users can refer to.

In a common use mode, only files that reference can be made to are allows for the access and printed according to a combination of a number of users. It is preferable that the common use mode is set in such a way that files that first and/or second users can refer to are allowed for the access.

In a common use mode, a state where a menu screen corresponding to a first user who was first logged in is displayed, when a second user is logged-in later, a disenabled (unavailable) mark is displayed for the setup, files, and folders that the first user does not allow other users to use; and an enabled (available) mark is displayed for the setup, files, and folders that two user can simultaneously use. A condition as to whether to allow first and second users to simultaneously log in to the device may be stored as policy information. Authentication may be performed referring to the stored condition. When the first and second users are allowed to simultaneously log in to the device, one of the users who requests the log-in procedure later is allowed to log in. When using a common use mode, the embodiment of the present disclosure allows a number of users to commonly share files, allowed for each other to open, with each other, and to create print data. Since users can share files, allowed for each other to open, with each other, the users do not need to share the files via a method of requesting the transmission of files to computers, such as a PC, etc., and thus can conveniently perform a print job.

When a user needs to log in to a device without the use of a RFID card, the embodiment allows the user to process his/her staff ID card etc., for identification information on the screen, and thus enables the authentication unit 109 to identify (recognize) the characters (e.g., ID) input by a keyboard or a manual motion (a user's gesture sensed on the touch screen). Another embodiment allows a user to use only a storage area, allowed for anyone to open, via a menu screen, without logging in to the device, and to perform a print job.

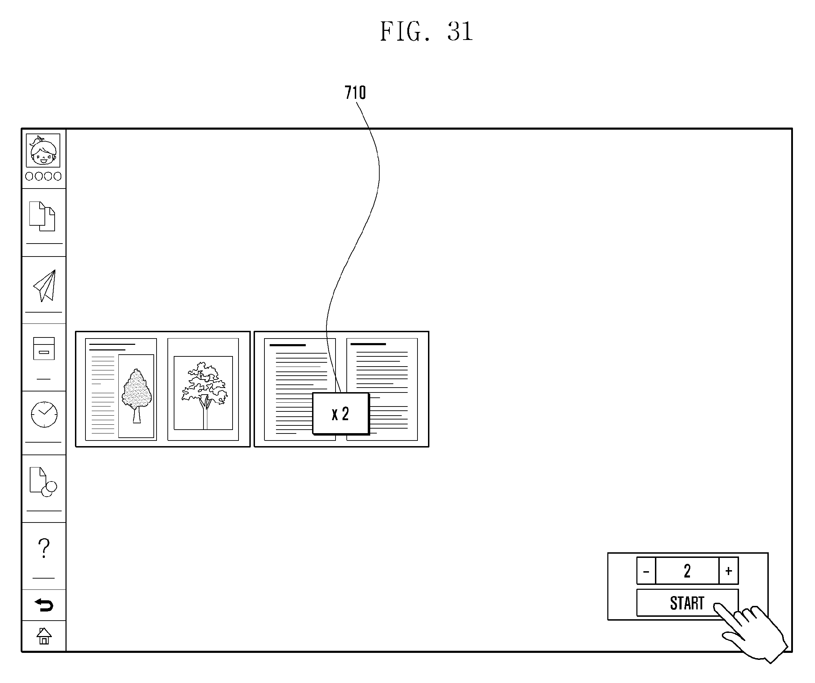

FIG. 31 is a diagram showing a screen for setting the number of copies according to an embodiment of the present disclosure.

Referring to FIG. 31, for example, in a state where a sub-screen for setting the number of copies is displayed, when the user applies a long touch to a printer page, the controller 112 is capable of changing the number of copies of the long touched printer page. For example, in a state where a printer page is displayed on a sub-screen in response to a long touch, when an indication 710 representing multiple times, e.g., twice or ┌×2┘, is input, the printing unit 113 is capable of printing the corresponding printer page twice the set, number of copies.

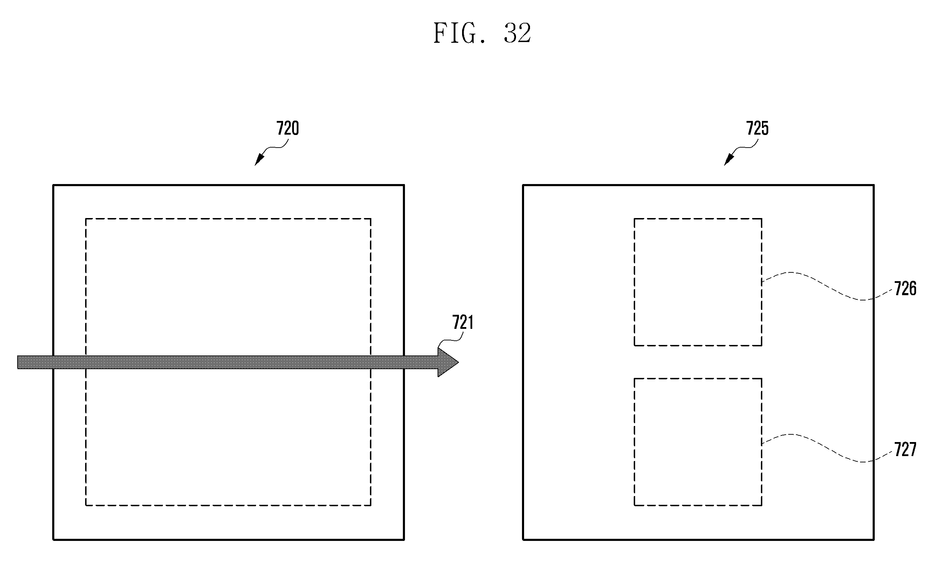

FIGS. 32 to 34 are diagrams that describe another example of a method of altering the layout of printer pages. In the embodiment referring to FIG. 25, the user changes the layout of pages by applying an action moving in the portrait direction. In the embodiment, the user may apply an action moving in the landscape direction on the screen or an action for moving as it splits one into two on the screen, thereby changing the layout of pages.

For example, as shown in diagram 720 of FIG. 32, the user may move the finger on the printer page in the horizontal direction 721 from one lengthwise edge (e.g., left) to the other lengthwise edge (e.g., right). In this case, the layout editor 106 divides the print page into two print pages, one of which is located at the top 726 in the printer page and the other of which is located at the bottom 727 as shown in diagram 725 of FIG. 32.

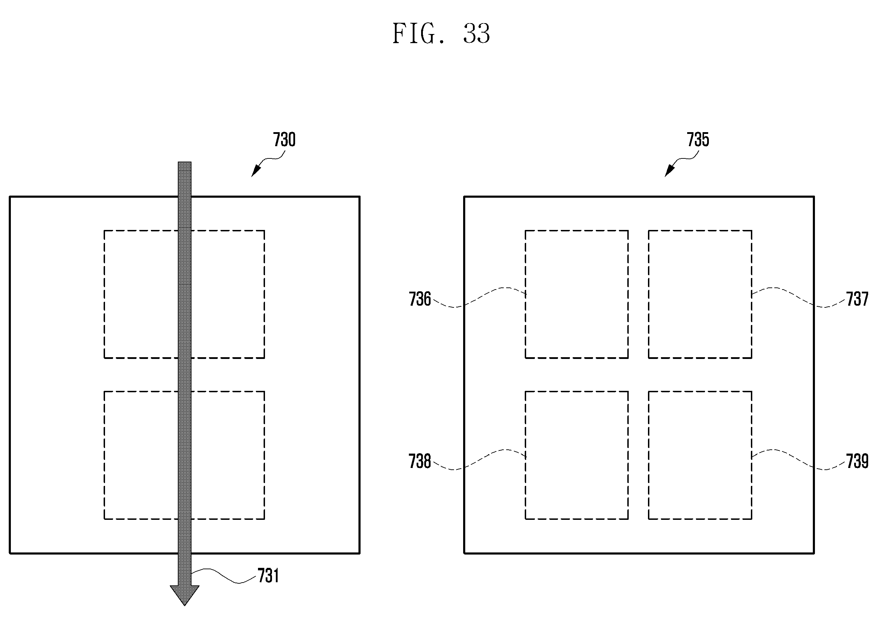

In addition, the user may move the finger on the printer page with the two vertically laid out print pages, shown in the diagram 725 of FIG. 32, in the vertical direction 731 as shown in diagram 730 of FIG. 33, from one edge (e.g., top) to the other edge (e.g., bottom). In this case, the layout editor 106 divides each of the print pages into two print pages, thereby creating four print pages in one printer page, arranged in two rows and two columns, as shown in diagram 735 of FIG. 33. The printing order may be paginated in order of top left 736, top right 737, bottom left 738 and bottom right 739.

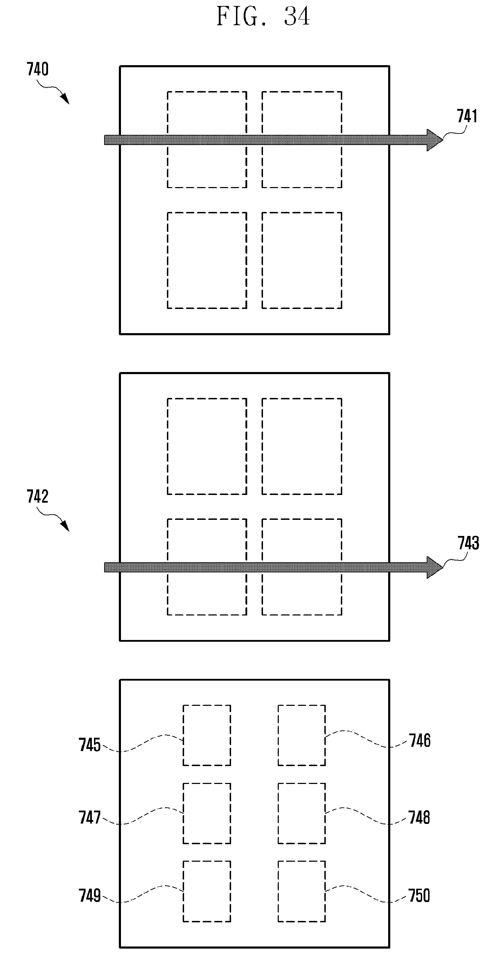

After splitting one print page into four print pages in two rows and two columns, a splitting action may be further applied to the divided print pages. For example, the user may apply: a splitting action 741 to two print pages at the top of the printer pager as shown in diagram 740 of FIG. 34; or a splitting action 743 to two print pages at the bottom of the printer pager as shown in diagram 742 of FIG. 34. In this case, the layout editor 106 creates six print pages in one printer page, arranged in three rows and two columns as shown in diagram 744 of FIG. 34. The six print pages in three rows and two columns are laid out in such a way that: the two print pages 745 and 746 are in the top of the printer page or the first row; the two print pages 747 and 748 are in the middle or the second row; and the two print pages 749 and 750 are in the bottom or the third row. After that, as the splitting action is applied to print pages, the number of print pages may increase in one printer page.

When the user stops moving the finger in the middle of applying the splitting action to the print page, and then performs a similar action as it moves back to the original location, the layout editor 106 cancels the input of the splitting action and stops setting the layout.

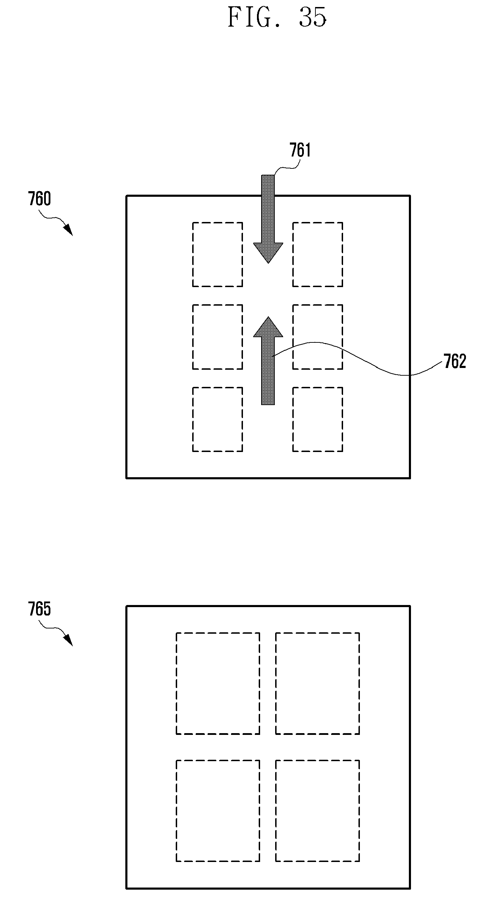

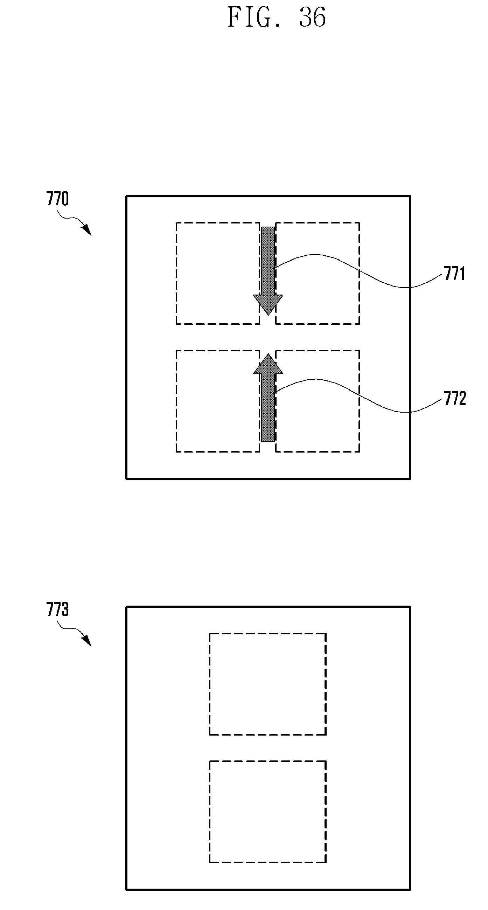

FIGS. 35 and 36 are diagrams that describe a method of altering the layout of printer pages according to an embodiment of the present disclosure.

Referring to FIGS. 35 and 36, as shown in diagram 760 of FIG. 35, when the user touches a location 761 between two print pages in the top and a location 762 between two print pages in the middle and moves the touches together in the directions, the page splitting editor 105 alters the layout of print pages from three rows by two columns to two rows by two columns in one printer page as shown in diagram 765 of FIG. 35. Similarly, as shown in the diagram 760 of FIG. 35, when the user touches a location between two print pages in the middle and a location between two print pages in the bottom and moves the touches together, the page splitting editor 105 may also alter the layout of print pages from three rows by two columns to two rows by two columns in one printer page as shown in the diagram 765 of FIG. 35.

In a state where the layout of print pages is arranged in two rows and two columns as shown in diagram 770 of FIG. 36, when the user touches a location 771 between two print pages in the top and a location 772 between two print pages in the bottom and moves the touches together in the directions, the page splitting editor 105 alters the layout of print pages from two rows by two columns to two rows by one column in one printer page as shown in diagram 773 of FIG. 36.

The embodiments shown in FIGS. 35 and 36 alter the layout of print pages in such a way that: actions move together in the vertical direction as if the actions move the print pages to each other together in the vertical direction so that the print pages are joined together, reducing the number of rows by one. However, the embodiments may also be modified in such a way that to alter the layout of print pages by actions moving together in the horizontal direction as if the actions move the print pages to each other together in the horizontal direction so that the print pages are joined together, reducing the number of columns by one.

As described above, the embodiment of the present disclosure allows the user to intuitively alter the layout (splitting or integrating) of print pages in a printer page. When changing the layout of print pages, the layout editor 106 is capable of rearranging print pages according to the altered layout in the printer page and displaying the re-arranged pages on the display unit 102. Therefore, the embodiment of the present disclosure is capable of rapidly arranging print pages in the printer page each time that the layout setup is changed.

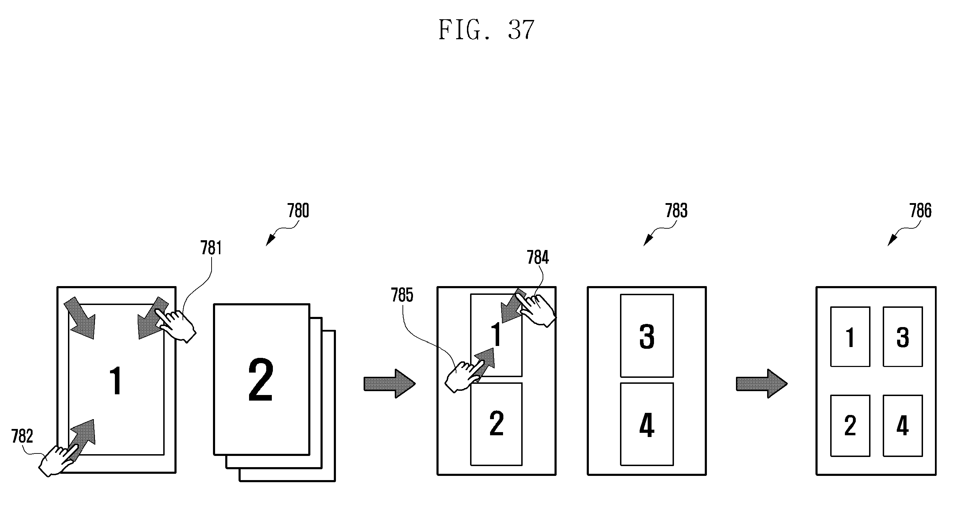

FIG. 37 is a diagram that describes a method of setting the layout of print pages by making a zoom-out motion according to an embodiment of the present disclosure.

Referring to FIG. 37, in a state where one print page in portrait is assigned to one printer page in portrait as shown in diagram 780 of FIG. 37, when the user presses two points 781 and 782, close to the ends of the print page, opposite to each other, with the fingers, and performs a pinch moving toward each other, the layout editor 106 assigns two print pages in portrait to one printer page in portrait in the vertical direction as shown in diagram 783 of FIG. 37. When the user touches two points 784 and 785, close to the ends of one of the print pages, opposite to each other, and performs a pinch moving toward each other as shown in the diagram 783 of FIG. 37, the layout editor 106 assigns print pages in portrait, in two rows and two columns, to one printer page in portrait as shown in diagram 786 of FIG. 37.

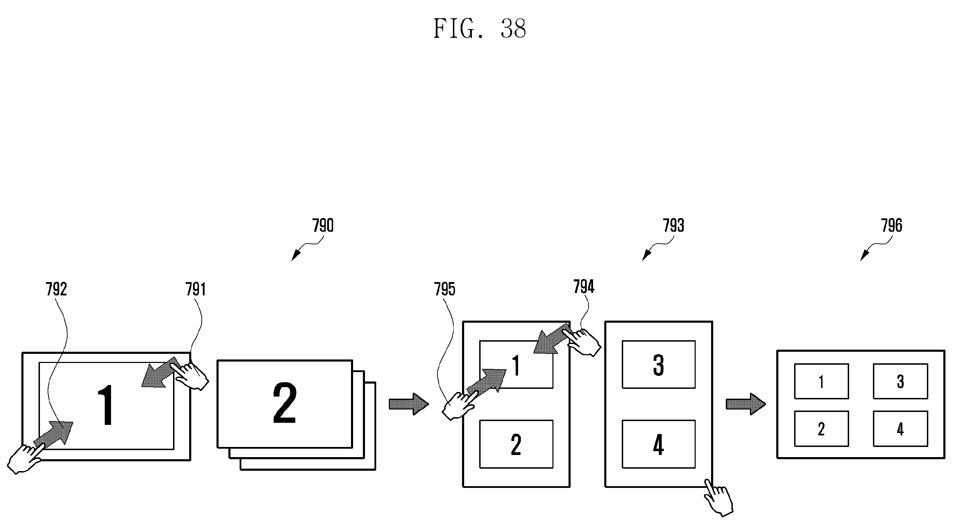

FIG. 38 is a diagram that describes a method of setting the layout of print pages by making a zoom-out motion according to an embodiment of the present disclosure.

Referring to FIG. 38, in a state where one print page in landscape is assigned to one printer page in landscape as shown in diagram 790 of FIG. 38, when the user presses two points 791 and 792, close to the ends of the print page, opposite to each other, with the fingers, and performs a pinch moving toward each other, the layout editor 106 assigns two print pages in landscape to one printer page in portrait in the vertical direction as shown in diagram 793 of FIG. 38. When the user touches two points 794 and 795, close to the ends of one of the print pages, opposite to each other, and performs a pinch moving toward each other as shown in the diagram 793 of FIG. 38, the layout editor 106 assigns print pages in landscape, in two rows and two columns, to one printer page in landscape as shown in diagram 796 of FIG. 38.

Although the embodiments shown in FIGS. 37 and 38 alter the layout of pages via a zoom-in motion in such a way that touches perform a pinch moving toward each other on print pages, it should be understood that the embodiments may also alter the layout of pages via a zoom-out motion in such a way that touches perform a pinch moving away from each other. For example, when touches perform a pinch out moving away from each other on a print page in one printer page, the layout editor 106 is capable of rearranging the layout of print pages in one printer page so that the number of print pages is decreased.

As described above, when the layout of pages are re-arranged according to the change in size of print pages, the layout editor 106 is capable of re-assigning print pages to the printer page based on the altered layout, and re-displaying the print pages on the display unit 102. Therefore, the embodiment of the present disclosure is capable of rapidly setting the layout of pages via a simple action (e.g., a pinch-in/out action).

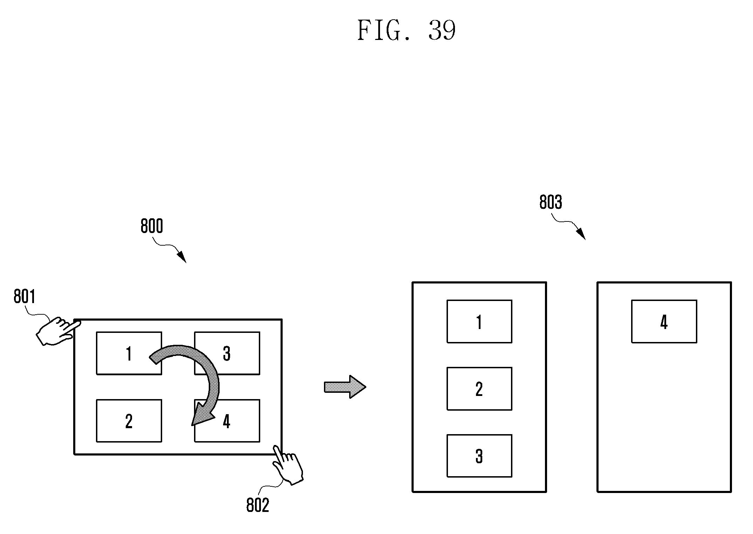

FIG. 39 is a diagram that describes a method of altering the layout of print pages by making a rotating motion according to an embodiment of the present disclosure.

Referring to FIG. 39, as shown in diagram 800, in a state where print pages in landscape are assigned in two rows and two columns to a printer page in landscape, when the user touches two points 801 and 802, close to the ends of the printer page, opposite to each other, with the fingers, and rotates the printer page clockwise or counterclockwise, the layout editor 106 changes the orientation of the printer page from landscape to portrait, and re-arranges the print pages on the printer page in portrait, maintaining the size of print pages. For example, as shown in diagram 803 of FIG. 39, three print pages in landscape are vertically assigned to one printer page in portrait, and one print page (content) in landscape is assigned to the next printer page in portrait. More specifically, when the user applies a rotation action to a printer page on which print pages are arranged, the layout editor 106 assigns the print pages to the printer page after rotation, maintaining the same orientation of the print pages on the printer page before rotation. In this case, when the layout editor 106 ascertains that all the print pages cannot be assigned to the same printer page after rotation, it creates a printer page in the same orientation as the printer page after rotation and assigns at least one print page which has not been assigned to the created printer page. In addition, when the layout editor 106 assigns the print pages to the printer page after rotation, maintaining the same orientation of the print pages on the printer page before rotation, it determines whether the print pages on the printer page before rotation can be assigned to the printer page after rotation so that the numbers of rows and columns of print pages on the printer page before rotation are identical to the those of rows and columns of print pages on the same printer page after rotation. When the layout editor 106 ascertains that the print pages on the printer page before rotation cannot be assigned to the printer page after rotation so that the numbers of rows and columns of print pages on the printer page before rotation are identical to the those of rows and columns of print pages on the same printer page after rotation, it is capable of changing the number of rows and/or the number of columns of print pages on the printer page after rotation. For example, as shown in FIG. 39, print pages in two rows and two columns on the printer page before rotation are altered to print pages in three rows and one column on the printer page after rotation. A condition as to whether print pages on the printer page before rotation can be assigned to the printer page after rotation in the same format may be determined, referring to the length and width of a printer page, the length and width of a print page, and the margins of a printer page.

The embodiment of the present disclosure is capable of simply assigning or arranging print pages to a printer page, according to a combination of: the size and orientation of a print page and the size and orientation of a printer page. In addition, the embodiment of the present disclosure ascertains that all print pages on a printer page before rotation cannot be assigned to the same printer page after rotation, it assigns parts of the print pages to the same printer page after rotation and the other print pages, which cannot be assigned to the same printer page, to the next printer page. Therefore, the embodiment of the present disclosure is capable of arranging or assigning print pages to one or more printer pages according to the rotation of printer page, without requiring the user to consider the size, direction, and orientation of the pages.

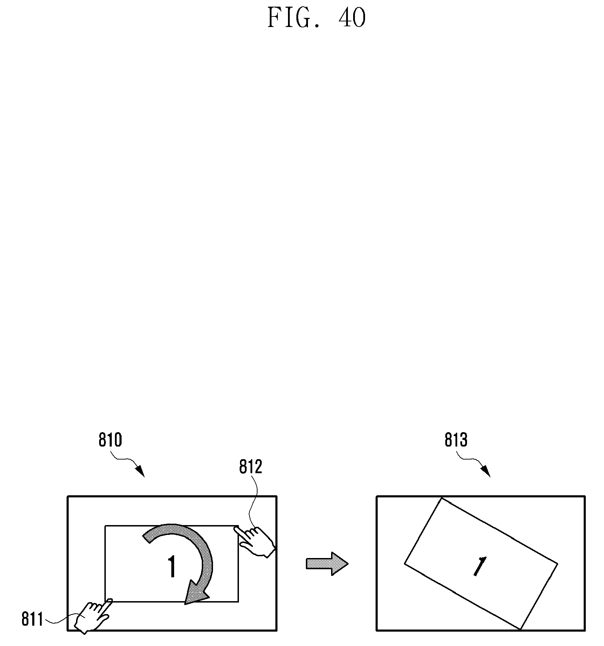

FIG. 40 is a diagram that describes a method of altering the layout of a print page by changing the orientation of the print page according to an embodiment of the present disclosure.

Referring to FIG. 40, as shown in diagram 810, when the user touches two points 811 and 812, close to the ends of the print page on a printer page, opposite to each other, with the fingers, and rotates the print page clockwise or counterclockwise, the layout editor 106 rotates the print page on the printer page, by the amount of rotation (a rotation angle), with respect to the printer page which is fixed. That is, the user rotates only the print page with respect to the printer page while maintain the orientation of the printer page. For example, as shown in diagram 813 of FIG. 40, the user changes the layout of the print page in such a way that the print page is rotated with respect to the printer page at an angle corresponding to the amount of action or rotation. Therefore, the embodiment of the present disclosure is capable of setting the layout with a high degree of freedom.

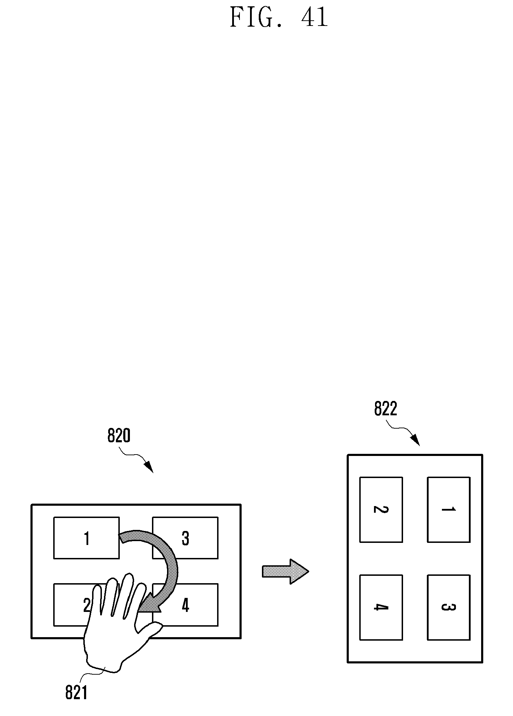

FIG. 41 is a diagram that describes a method of altering the orientation of a printer page and the orientation of print pages according to an embodiment of the present disclosure.

Referring to FIG. 41, as shown in diagram 820, in a state where print pages in landscape are assigned in two rows and two columns to a printer page in landscape, when the user applies an action 821 for rotating the entire printer page along with print pages clockwise (or counterclockwise), the layout editor 106 rotates the printer page along with the print pages clockwise, or changes the orientation of the printer page from landscape to portrait, along with the print pages fixed on the printer page, as shown in diagram 822. For example, as shown in the diagram 822, while the printer page is rotated clockwise, at 90°, changing the orientation from landscape to portrait, the print page thereon are also rotated clockwise, at 90°, along with the printer page. In the embodiment, the action for rotating the entire printer page along with print pages may be implemented in such a way that three or more touches are applied to and rotated on the screen clockwise or counterclockwise. In another embodiment, the action for rotating the entire printer page along with print pages may be implemented in such a way that four or more touches (e.g., four fingers or five or more fingers) are applied to and rotated on the screen. Therefore, the embodiment of the present disclosure is capable of changing the orientation of the printer page along with print pages thereon.

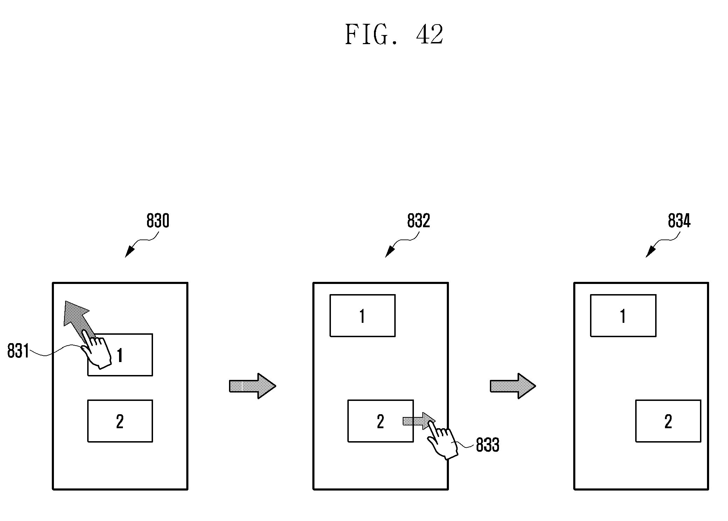

FIG. 42 is a diagram that describes a method of altering the location of print pages in a printer page according to an embodiment of the present disclosure.

Referring to FIG. 42, as shown in diagram 830, in a state where print pages in landscape are displayed (located) at the top and bottom on a printer page in portrait, when the user touches a print page at the top on the printer page and moves in a specific direction 831 (e.g., to the top left), the layout editor 106 changes the location of the print page on the printer page according to the direction and amount of the user's action. For example, as shown in diagram 832, the layout editor 106 moves the print page from the top to the top left. Similarly, when the user touches a print page at the bottom on the printer page and moves in a specific direction 833 (e.g., right), the layout editor 106 changes the location of the print page on the printer page according to the direction and amount of the user's action. For example, as shown in diagram 834, the layout editor 106 moves the print page at the bottom in the right direction. Therefore, the embodiment of the present disclosure is capable of setting the layout with a high degree of freedom.

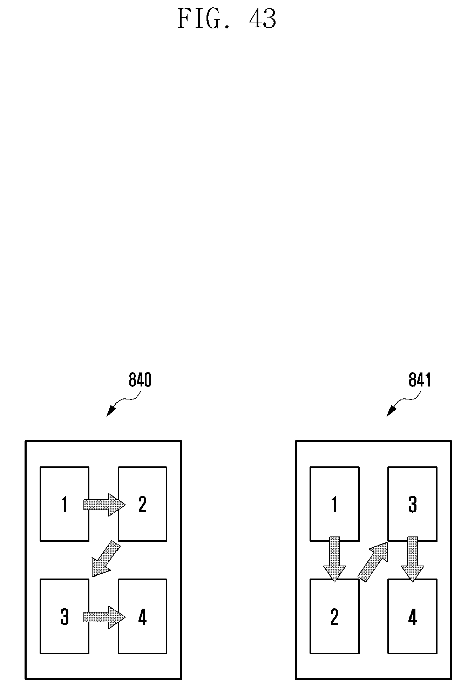

FIG. 43 is a diagram that describes the order of arranging print pages in a printer page according to an embodiment of the present disclosure.

Referring to FIG. 43, as shown in diagram 840, regardless of the total number of print pages arrayed in one sheet of printer page, the print pages may be arranged in order of rows first: left to right and then top to bottom. Alternatively, as shown in diagram 841 of FIG. 43, the print pages may be arranged in order of columns first: top to bottom and then left to right.

The layout editor 106 receives a user's input for setting the arrangement order of print pages and arranges print pages in the set order.

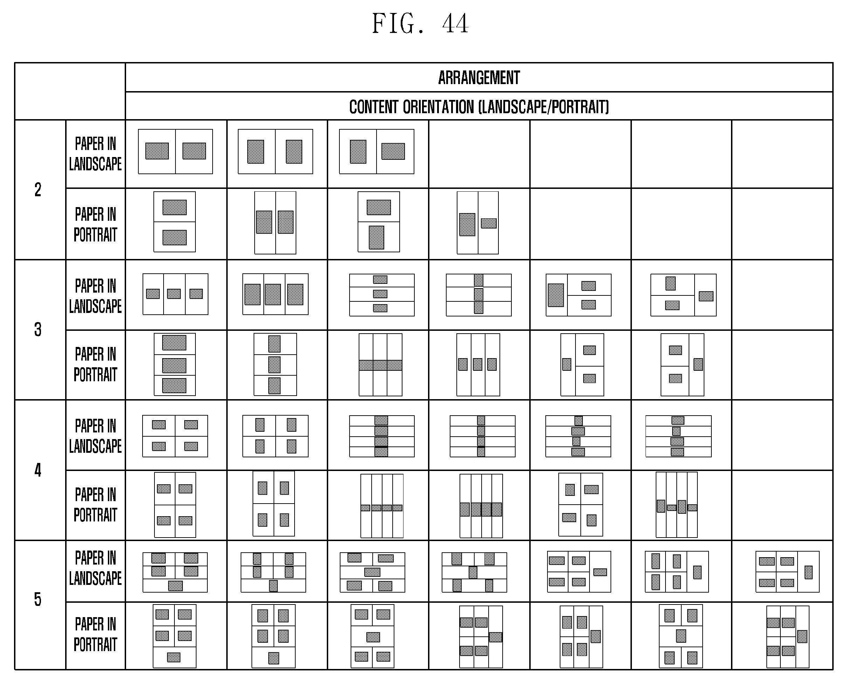

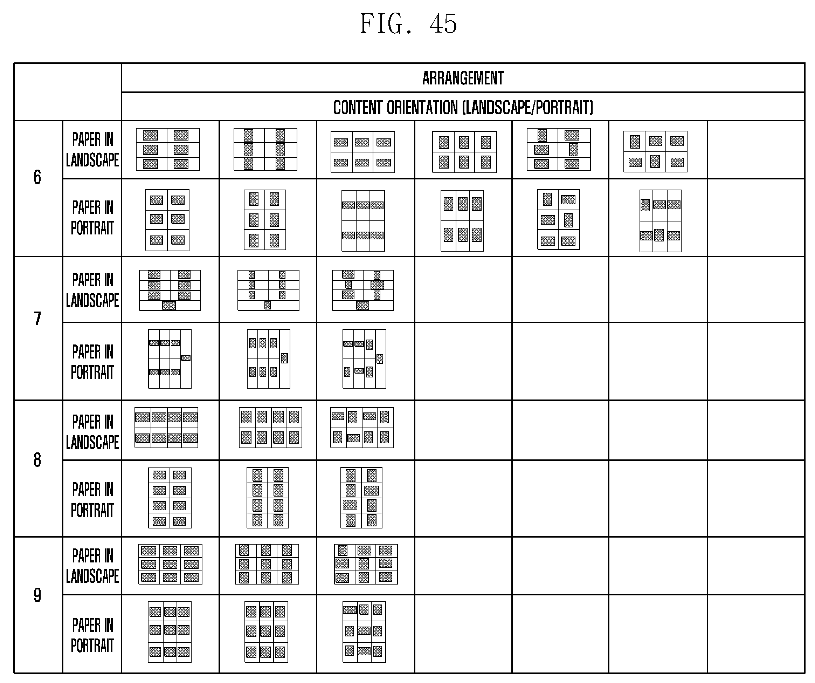

FIGS. 44 and 45 are diagrams showing a layout template according to an embodiment of the present disclosure.

Referring to FIGS. 44 and 45, the layout templates are stored in the storage unit 111. When the user inputs an instruction for selecting a layout template, the layout editor 106 reads out a layout template corresponding to the user's selection from the storage unit 111 and applies the readout layout template to the print page setup. The layout template has different types of patterns varying according to a combination of: the number of print pages, assigned to one printer page (paper); the orientation of printer page; and the orientation of print pages.

The layout template is formed in such a way that a layout of printer page is fixedly pre-determined and then print pages are arranged in split areas. For example, as shown in FIG. 44, when the number of print pages assigned to one printer page is two and the printer page is suitable for landscape, the layout template may include: a pattern where the printer page is vertically divided into areas top and bottom and print pages in landscape are arranged in the top and bottom split areas respectively; a pattern where the printer page is horizontally divided into areas left and right and print pages in portrait are arranged in the left and right split areas respectively; a pattern where the printer page is vertically divided into areas top and bottom, one print page in landscape is arranged in one of the top and bottom split areas, and another print page in portrait is arranged in the other one of the top and bottom split areas; and a pattern where the printer page is horizontally divided into areas left and right, one print page in portrait is arranged in one of the left and right split areas, and another print page in landscape is arranged in the other one of the left and right split areas. In addition, as shown in FIGS. 44 and 45, when three or more print pages are assigned to one printer page, the layout template may have various types of patterns according to the orientation of printer page (paper), the split direction (a horizontal split direction and a vertical split direction), and the orientation of print page.

Therefore, the embodiment of the present disclosure allows a user to select a corresponding one of the layout templates, considering a number of options. It should be understood that FIGS. 44 and 45 are examples of the types of templates according to the embodiment of the present disclosure and the present disclosure is not limited thereto.

In the following description, the method of altering the location and the size of each of the split areas in a printer page is explained in detail referring to the drawings.

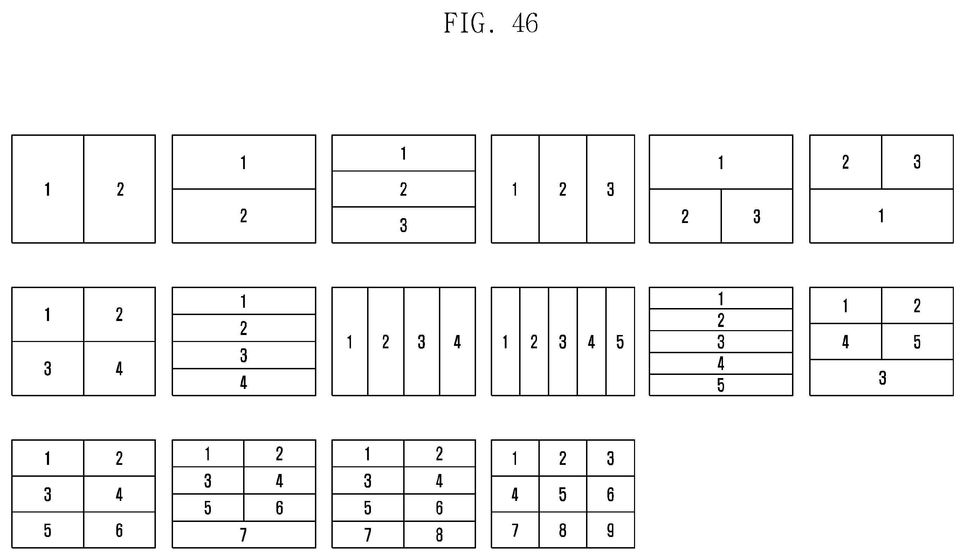

FIG. 46 is a diagram showing examples of layout templates for a printer page whose split areas are determined, by default, in location and size, and which are stored in the storage unit 111 according to an embodiment of the present disclosure.

Referring to FIG. 46, the layout template for a printer page may be created as a printer page is split to various types of areas according to the orientation of a printer page and the number of print pages assigned to the printer page. For example, the layout template may be created to include: a number of patterns by horizontally splitting a printer page; a number of patterns by horizontally splitting a printer page patterns; and a number of patterns by horizontally or vertically splitting a printer page; etc. The layout template may be created so that the total number of split pattern areas is even or odd. In an embodiment, the layout template may be created with split areas along with an arrangement order in which print pages will be arranged to the split areas.

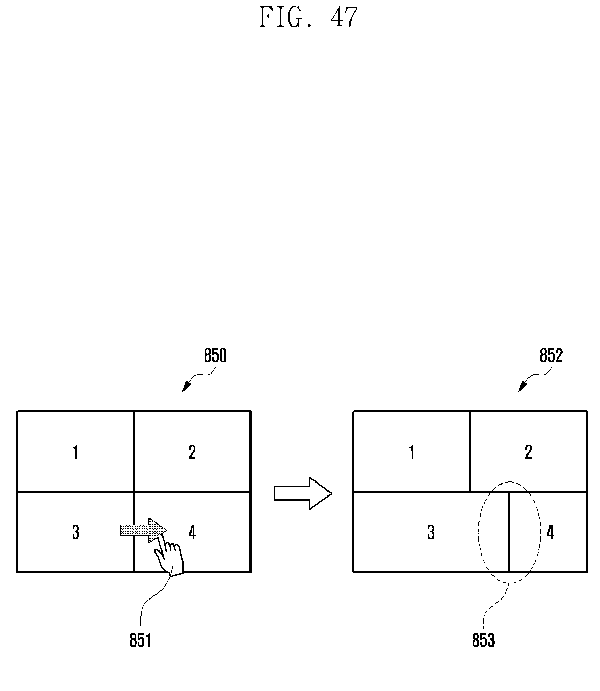

FIG. 47 is a diagram that describes a method of altering the size of split areas according to an embodiment of the present disclosure.

Referring to FIG. 47, when the user selects a specific layout template, the layout editor 106 displays the selected layout template on the display unit 102. As shown in diagram 850, when the user touches and moves the boundary line (split line) between the split areas of the layout template in a direction, the layout editor 106 moves and displays the boundary line in the direction. For example, in a state where a layout template for a printer page in landscape is selected and displayed which is horizontally and vertically split into four split areas, top left and right and bottom left and right, when the user touches the boundary line at a location 851 between the bottom left and right split areas and moves it right as shown in the diagram 850, the layout editor 106 moves the boundary line to a location 853 as shown in diagram 852. In this case, while the boundary line between the top left and right split areas is not moved, the boundary line between the bottom left and right split areas moves from the location 851 to the location 853 so that the bottom left and right split areas alter in size. Therefore, the embodiment of the present disclosure allows the user to easily alter the size of the split areas from a default layout template with altering the location of the boundary lines.

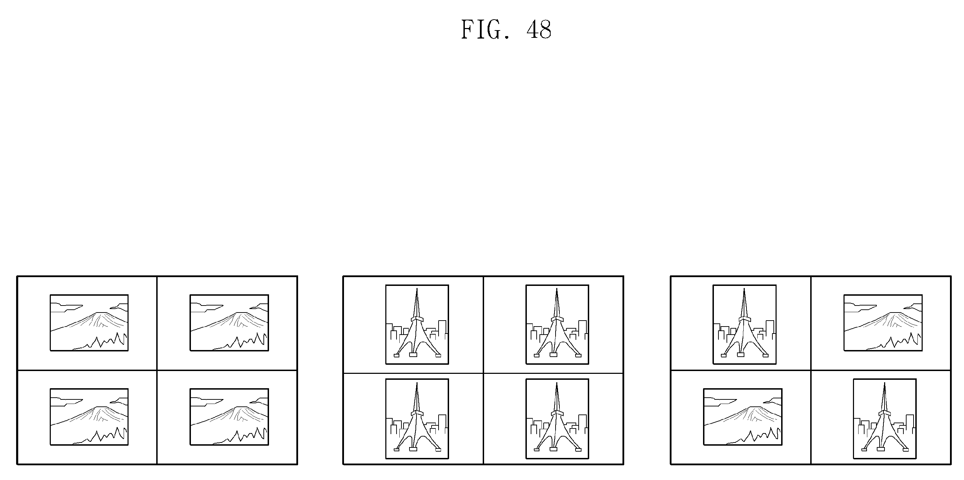

FIG. 48 is a diagram that describes a method of arranging print pages in a layout template according to an embodiment of the present disclosure.

Referring to FIG. 48, when the user has selected a condition as to whether to alter the boundary line in the selected layout template or has altered the boundary line, the layout editor 106 arranges print pages in the layout template. For example, when a layout template of a printer page in landscape has four split areas, top left and right and bottom left and right, the layout editor 106 arranges print pages in the split areas, respectively. When the print pages are in portrait, the layout editor 106 arranges the print pages in portrait in the split areas. Similarly, when the print pages are in landscape, the layout editor 106 arranges the print pages in landscape in the split areas.

When print pages to be arranged in the split areas do not meet the split areas in terms of size, the layout editor 106 alters the size of print pages and then arranges the size-altered print pages in the split areas. For example, when the length and/or width of a print page are/is greater than the size of the split area, the layout editor 106 reduces the size of print pages and then arranges the size-reduced print pages in the split areas. When the split areas are greater in size than print pages, the layout editor 106 increases the size of print pages and then arranges the size-increased print pages in the split areas.

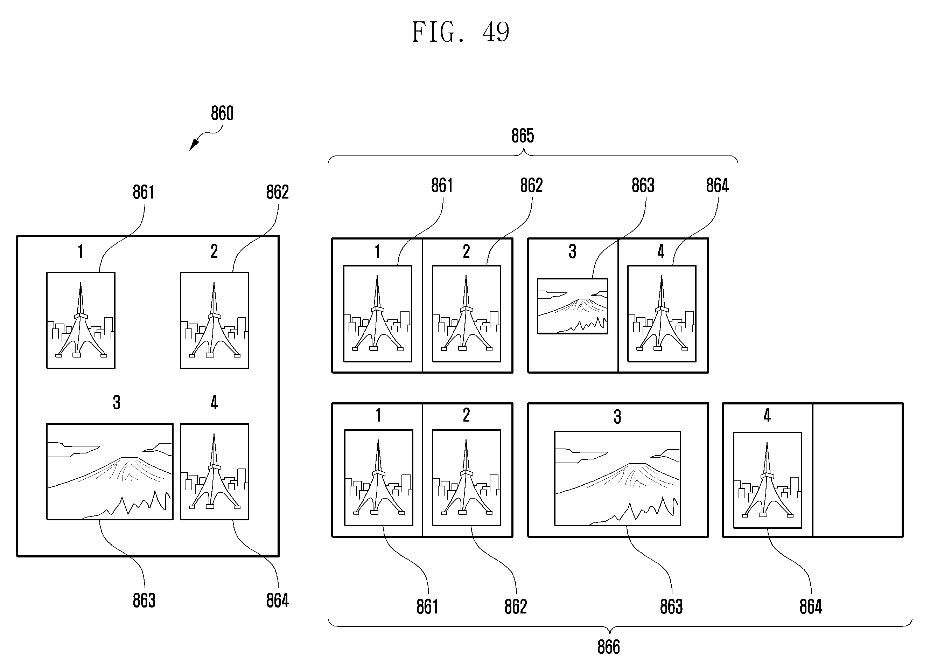

FIG. 49 is a diagram that describes cases when the size of print pages is changed and when the size of print pages is not changed, with respect to a layout template according to an embodiment of the present disclosure.

Referring to FIG. 49, as shown in diagram 860, it is assumed that: four print pages (content to print corresponding to four pages) is assigned to (arranged in) a printer page; print pages 861, 862, and 864 are the same in size; and print page 863 is greater in size than print pages 861, 862, and 864. It is also assumed that: the printer page is in landscape and employs a layout template where areas are split side-by-side.

In a state where a setting has been made to alter the size of print page, when the user applies an action for increasing or decreasing the size of print page to the input unit 103, the layout editor 106 reduces the print page 863 to a size so that it can be inserted into a corresponding split area in the layout template and then arranges the reduced print page 863 in the split area. For example, as shown in diagram 865, the print pages 861, 862, 863, are 864 may be arranged in left and right split areas of the printer pages, respectively. Since the print pages 861, 862, ad 864 have a size so that they can be inserted to the split area, they can be arranged in corresponding split areas without changing their size. When the embodiment of the present disclosure needs to process print pages at least one of which differs in size from the others, it is capable of altering the size of the print page to meet that of the split area in the layout template. Therefore, although print pages differ in size from each other, the embodiment of the present disclosure is capable of altering the size of the print pages and arranging the size-altered print pages in the selected layout template.

When the user applies an action for increasing or decreasing the size of print page to the input unit 103, the layout editor 106 is capable of arranging the print page 863 in the printer page without changing the size. For example, as shown in diagram 866, the layout editor 106 is capable of arranging print pages 861 and 862 in one printer page according to the layout template. Since the print page 863 has a size so that it cannot be inserted into one split area, the layout editor 106 does not changes the size of the print page 863, and assigns the print page 863 to one printer page without splitting the printer page. The layout editor 106 arranges the print page 864 to the left split area of the printer page according to the layout template.

Therefore, although print pages differ in size from each other, the embodiment of the present disclosure is capable of altering the split areas of the layout template and adaptively arranging the print pages in the split areas, without altering the size of print pages.

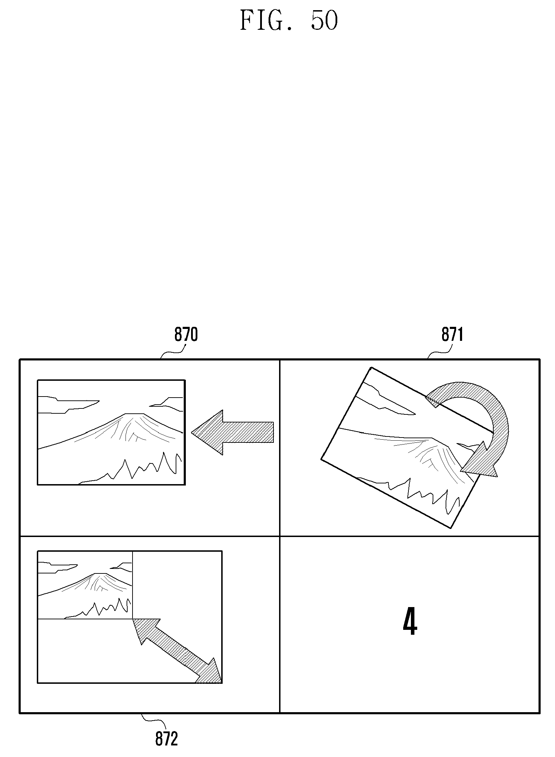

FIG. 50 is a diagram that describes a method of applying various types of edit to print pages distributed to printer pages according to an embodiment of the present disclosure.

Referring to FIG. 50, the layout editor 106 is capable of editing print pages assigned to a printer page according to a user's actions input to the input unit 103. For example, when the user applies an action for touching and moving part of the print page in a direction, e.g., left, the layout editor 106 moves the print page, left, within the split area of the printer page, as shown in diagram 870. When the user applies an action for touching two points within the area of the print page and rotating the touched points with respect to the center of the print page, the layout editor 106 rotates the print page according to the amount and the direction of rotation, as shown in diagram 871. When the user applies a pinch-out action to the print page within the printer page, the layout editor 106 alters (increases) the size of the print page within the printer page, as shown in diagram 872.

Therefore, the embodiment of the present disclosure allows a user to separately edit print pages assigned to one printer page. The embodiment of the present disclosure is capable of adaptively arranging print pages according to a user's actions.

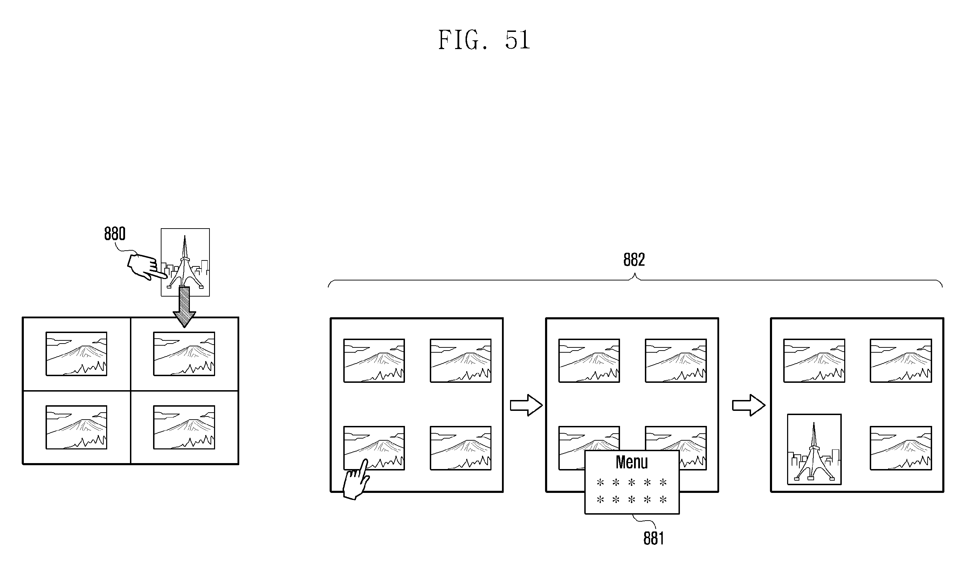

FIG. 51 is a diagram that describes a method of altering arranged print pages according to an embodiment of the present disclosure.

Referring to FIG. 51, as shown in diagram 880, in a state where print pages are assigned to a layout template, when a new print page is read out from the storage areas of the mobile terminal 20, shared server 30, web server 40, etc. and is dragged onto one of the print pages, the layout editor 106 is capable of replacing the assigned print page with the dragged print page. That is, the layout editor 106 is capable of deleting the assigned print page from the printer page and assigning the dragged print page to the location in the printer page.

In an embodiment, as shown in diagram 882, when detecting, via the input unit 103, a long touch input to a print page which needs to be replaced with a new print page, the layout editor 106 is capable of displaying a menu screen 881 including information (e.g., title, thumbnails, etc.) related to other print pages. The layout editor 106 reads out, a via the menu screen 881, a selected print page from the storage area of the mobile terminal 20, shared server 30, web server 40, etc., and alters the assigned print page to the selected print page.

Therefore, although print pages have already arranged in a printer page, the embodiment of the present disclosure allows a user to perform the alteration (replacement) of the print pages in the printer page, while viewing the images of the arranged print pages.

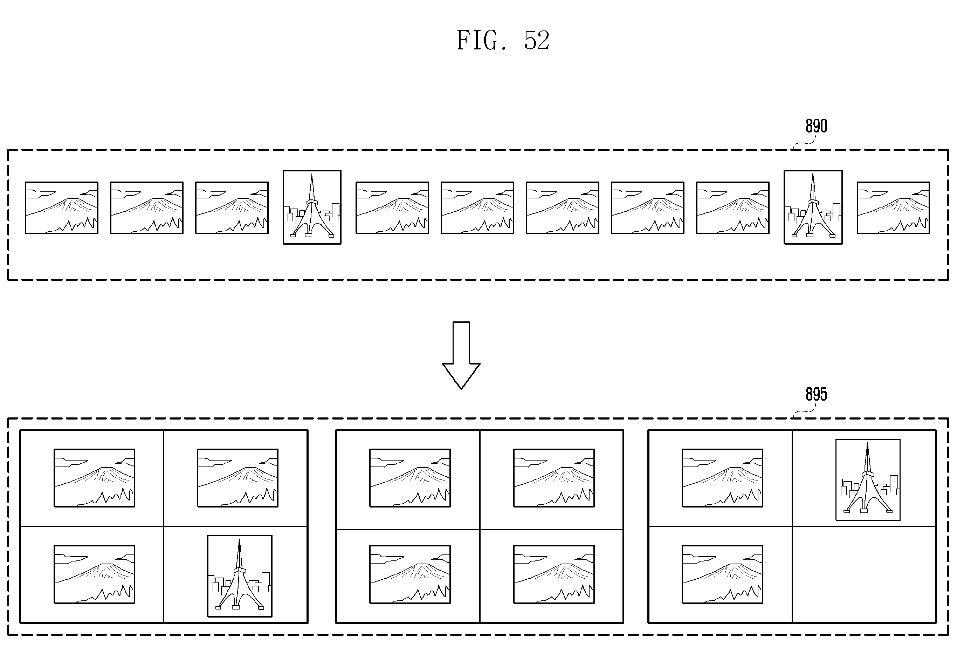

FIG. 52 is a diagram that describes a method of arranging a number of print pages according to layout templates according to an embodiment of the present disclosure.

Referring to FIG. 52, when the embodiment of the present disclosure needs to print a number of print pages, it is capable of automatically arranging the print pages a printer page using the layout template which has been initially selected. For example, when print pages suitable for being printed in portrait and print pages suitable for being printed in landscape coexist as shown in diagram 890, the layout editor 106 is capable of altering the size of print pages, at need, using the layout template, and arranging print pages in slit areas of each of the printer pages as shown in diagram 895.

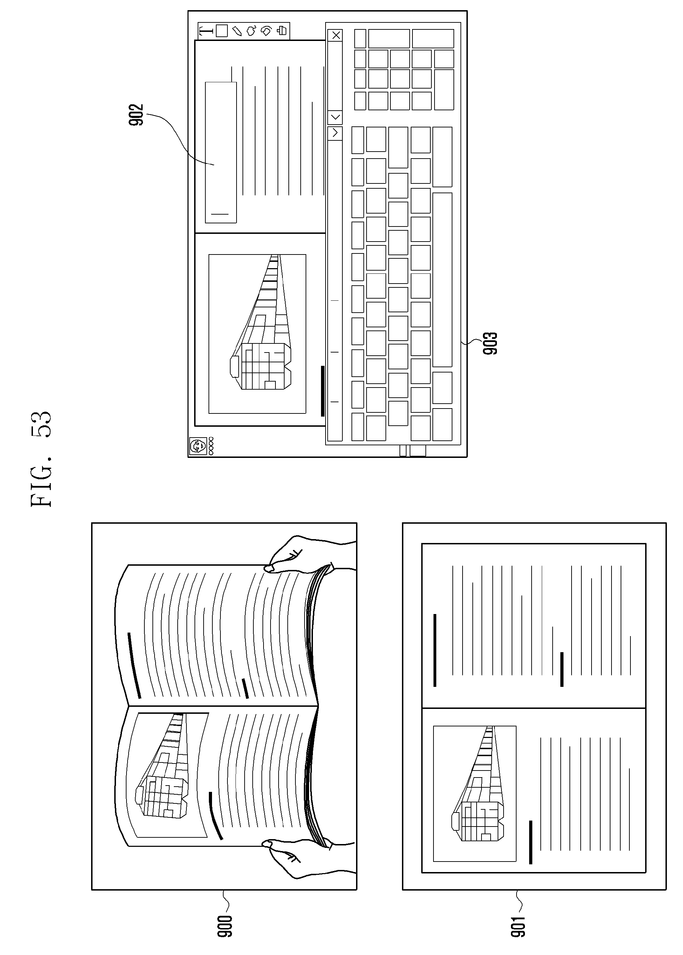

FIG. 53 is a diagram that describes a method of editing photographic data according to an embodiment of the present disclosure.

Referring to FIG. 53, as shown in diagram 900, when a user puts a document to print on a photography copy stand and touches a photographic (scan) button, the manuscript photographing unit 107 takes an image of the document within a photographing range and creates photographic image data. The photographic image data editor 108 is capable of creating edit data, based on the created photographic image data. The edit data refers to data which is edited from photographic image data and thus is printed. For example, the edit data may be data created as photographic data further includes characters or part of photographic data is deleted. For example, as shown in diagram 901, the photographic image data editor 108 is capable of creating edit data from photographic image data by retouching details (e.g., slope, angle) of characters, photos, etc. When the user touches part of the image corresponding to the crated edit data, the photographic image data editor 108 is capable of displaying: a character input field 902 with respect to the touched point; and simultaneously a software keyboard 903 on the bottom of the screen. When the user enters characters in the character input field 902 via the software keyboard, the photographic image data editor 108 is capable of creating edit data based on the input characters. In an embodiment, the photographic image data editor 108 is capable of adding speech balloons, highlights, etc., to the edit data.

When the user inputs a print instruction, the printing unit 113 is capable of creating print data based on the edit data and printing the created print data.

The image forming device according to the embodiment of the present disclosure is equipped with a display unit 102 of an A3 size. Therefore, when a paper to print is less than or equal to A3 size, the image forming device is capable of displaying photographic image data at the actual size on the display unit 102.

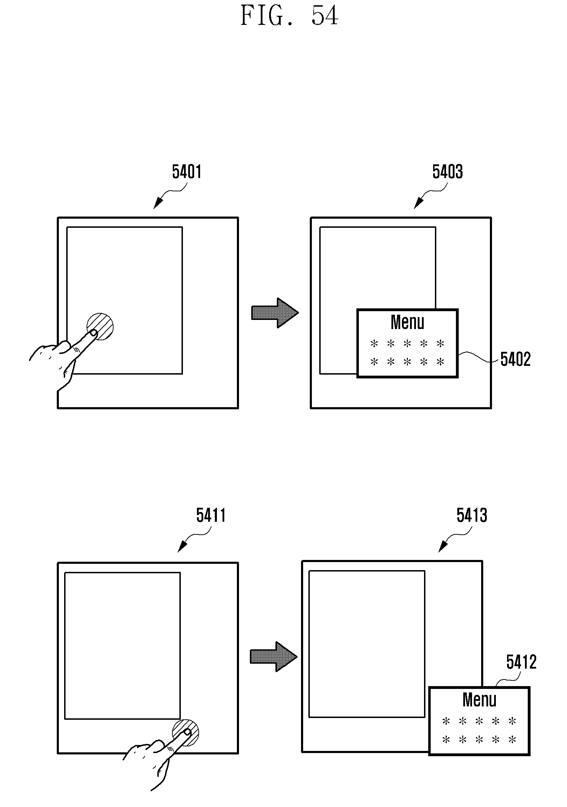

FIG. 54 is a diagram that describes a method of displaying menus related to print pages or printer pages according to an embodiment of the present disclosure.

Referring to FIG. 54, when the image forming device detects a pre-defined touch input (e.g., a long touch, a double touch, a gesture, etc.) on a print page as shown in diagram 5401, it is capable of displaying a menu box 5402 on the print page as shown in diagram 5403. The menu box 5402 may contain at least one menu related to print pages. For example, the menu box may contain a menu for performing the alteration (replacement) of print pages, a menu for altering the size of print pages, a menu for performing the rotation of print pages, a menu for setting the number of copies, etc.

When the image forming device detects a pre-defined touch input (e.g., a long touch, a double touch, a gesture, etc.) on a printer page as shown in diagram 5411, it is capable of displaying a menu box 5412 on the printer page as shown in diagram 5413. The menu box 5412 may contain at least one menu related to printer pages. For example, the menu box may contain a menu for altering the size of printer pages, a menu for altering the layout of printer pages, a menu for altering the orientation of the printer pages, a menu for setting the number of copies, etc.

As described above, the embodiment of the present disclosure allows a user to easily execute various functions related to a printer page or a print page via a menu box displayed by a user's touch input.

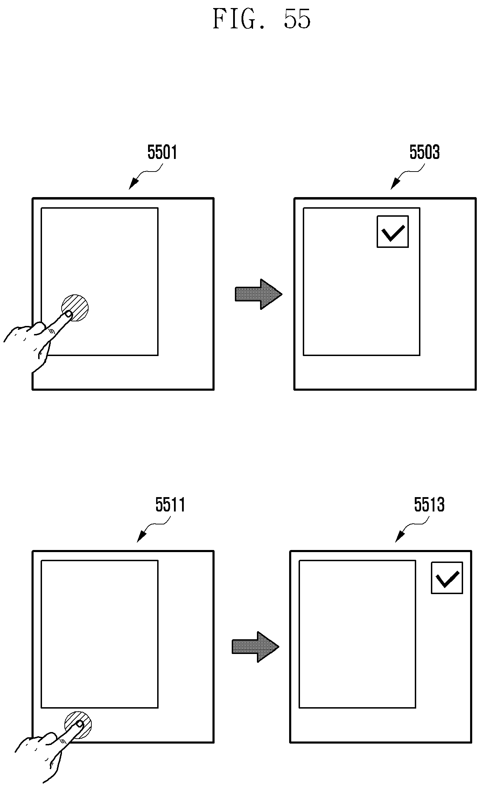

FIG. 55 is a diagram that describes a method of selecting a print page or a printer page according to an embodiment of the present disclosure.

Referring to FIG. 55, when the image forming device detects a pre-defined touch input (e.g., a long touch, a double touch, a gesture, etc.) on a print page as shown in diagram 5501, it is capable of displaying a checkbox on the print page as shown in diagram 5503. When one printer page is assigned a number of print pages, a checkbox is shown on the individual print pages.

When the image forming device detects a pre-defined touch input (e.g., a long touch, a double touch, a gesture, etc.) on a printer page as shown in diagram 5511, it is capable of displaying a checkbox on the printer page as shown in diagram 5513.

As described above, the embodiment of the present disclosure allows a user to select a printer page or a print page by applying a touch input or a tick make to the checkbox, and to execute a specific function (e.g., deletion, size-alteration, orientation alteration, etc.) for the selected printer page or the selected print page.

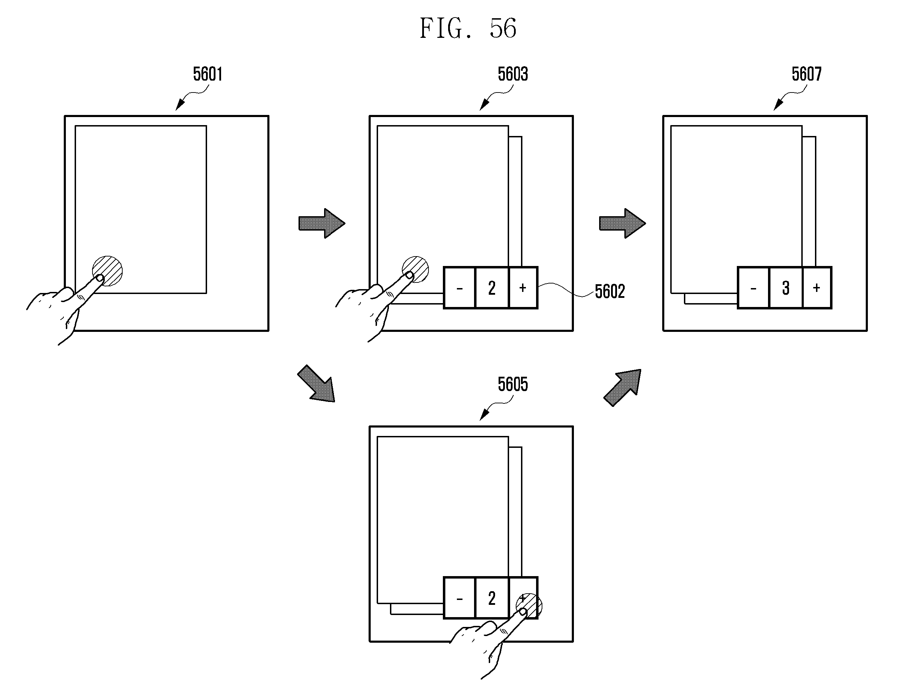

FIGS. 56 to 58 are diagrams that describe a method of setting the number of copies according to an embodiment of the present disclosure.

Referring to FIG. 56, when the image forming device detects a pre-defined touch input (e.g., a long touch, a double touch, a gesture, etc.) on a print page as shown in diagram 5601, it is capable of displaying a copy number setting menu 5602 for setting the number of copies on the print page as shown in diagram 5603 or 5605. The copy number setting menu 5602 displays a number corresponding to the currently set number of copies. The copy number setting menu 5602 includes an increase button (+) for increasing the number of copies and a decrease button (-) for decreasing the number of copies. When the image forming device detects a touch (e.g., a tap) on a print page as shown in the diagram 5603, it increases the number of copies from "2" to "3" as shown in diagram 5607. Alternatively, when the image forming device detects a touch (e.g., a tap) on the increase button (+) as shown in the diagram 5605, it increases the number of copies from "2" to "3" as shown in the diagram 5607. Although it is not shown, the image forming device detects a touch on the decrease button (-) and decreases the number of copies by one.

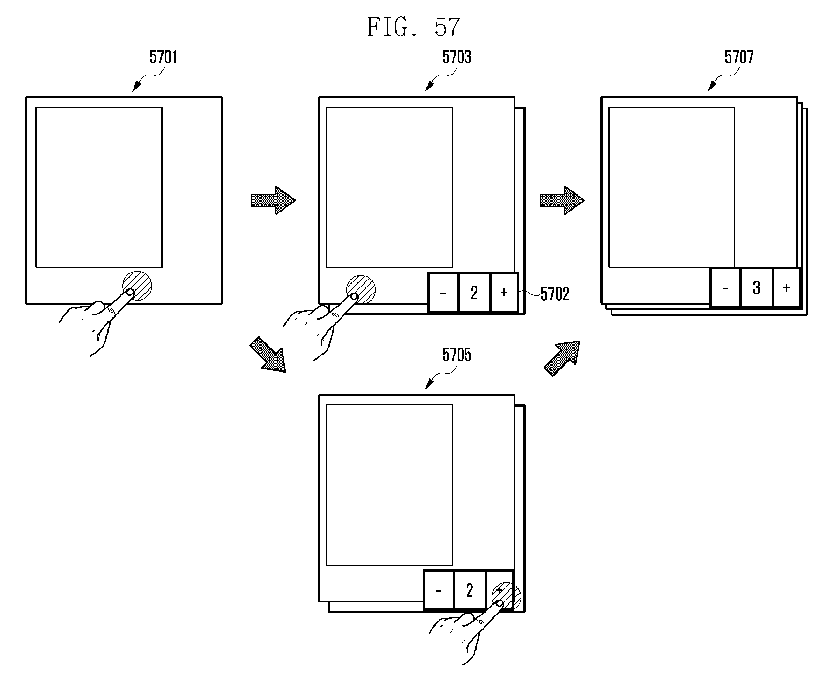

Referring to FIG. 57, when the image forming device detects a pre-defined touch input (e.g., a long touch, a double touch, a gesture, etc.) on a printer page as shown in diagram 5701, it is capable of displaying a copy number setting menu 5702 for setting the number of copies on the printer page as shown in diagram 5703 or 5705. The copy number setting menu 5702 is similar to the copy number setting menu 5602 shown in FIG. 56. When the image forming device detects a touch on the increase button (+) or on a printer page, it increases the number of copies for printer pages from "2" to "3" as shown in diagram 5707. The image forming device detects a touch on the decrease button (-) and decreases the number of copies.

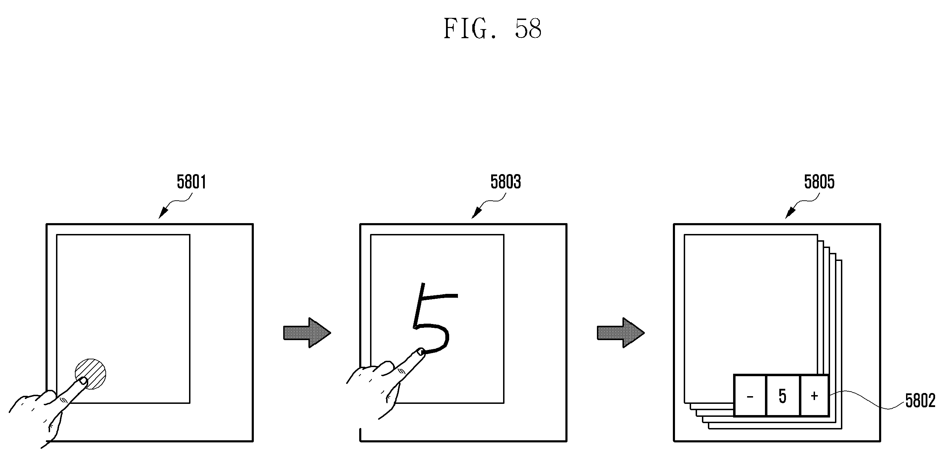

Referring to FIG. 58, when the image forming device detects a pre-defined touch input (e.g., a long touch, a double touch, a gesture, etc.) on a print page as shown in diagram 5801, it is capable of performing a function for waiting for a user's gesture for setting the number of copies. Although it is not shown in diagram 5803, when the wait function is executed, the image forming device is capable of displaying a message "Please enter the number of copies."

When detecting a user's gesture drawing a number '5' on a corresponding print page as shown in the diagram 5803, the image forming device is capable of displaying a copy number setting menu 5802 where the number of copies has been set to 5 as shown in diagram 5805. The copy number setting menu 5802 is similar to the copy number setting menus 5602 and 5702 shown in FIGS. 56 and 57. That is, the image forming device detects a touch on the increase button (+) or decrease button (-) and increases or decreases the number of copies.

Therefore, the embodiment of the present disclosure is capable of separately setting the number of copies for a specific printer page or a specific print page, using various methods.

As described above, the image forming device allows users to manipulate data to print intuitively and creatively, and to perform a print job, without requiring the user to operate computers such as a PC. Since the image forming device allows users to perform a print or page setup for content to print and to perform a print job, without using computers such as a PC, it can be installed to public areas, such as stations, airports, schools, hotels, etc. Therefore, users can handle content to print via only the image forming device installed to a public area and obtain the printed result therefrom.

The image forming device is capable of including: at least one processor; at least one memory unit (storage unit); at least one module which is stored in at least one memory unit and executed by at least one processor; a display unit for displaying at least one print image based on at least one file; a selection unit for receiving an instruction for selecting at least one of the at least one displayed print image, as a page to print (print page); and a printing unit for performing a print process based on the at least one selected print page. The at least one module includes: an acquisition module for acquiring the at least one file from at least one file storage area connected to an external system and providing the acquired file to the display unit; and a print data creating module for creating print data, based on at least one print page that has received a selection instruction via the selection, and providing the created print data to the printing unit.

The image forming device is capable of including modules for performing various functions in the storage unit and enabling the processor to read out the modules from the storage unit, thereby executing corresponding functions.

As described above, various embodiments of the present disclosure are capable of controlling the print page setup, without requiring users to directly operate a print control device (or an image forming device), thereby enhancing user convenience.

It is preferable that the image forming device according to the embodiments is implemented with a computer. In this case, a software program for performing the functions of the image forming device are recorded on a computer-readable recording medium. The software program recorded on the computer-readable recording medium is executed by the computer system to perform the functions. The term ┌computer system┘ may include an operating system (OS), hardware devices, such as peripherals, etc. The term ┌computer readable recording medium┘ may be: movable storage media such as a flexible disk, a magneto-optical disk, read only memory (ROM), compact disc ROM (CD-ROM), etc.; a storage device such as hard disk installed to a computer system; etc. In addition, the term ┌computer readable recording medium┘ is also capable of storing a software program for a period of time in a way as a volatile memory built-in a computer system serving as a client or server does, when a communication line dynamically retains a software program for a relatively short period of time while the software program is transmitted via a network such as the Internet, or a communication circuit such as a telephone circuit. Alternatively, the software program may be implemented with: part of the functions described above, a combination of the functions described above with a program recorded in a computer system, or with the use of a programmable-logic device such as field-programmable gate arrays (FPGAs), etc.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An image forming device comprising:
at least one memory;
a display configured to display at least one print image based on at least one file; and
at least one processor configured to control to:
select at least one of the at least one displayed print image, as a page to print (print page), based on a received instruction,
perform a print process based on the at least one selected print page,
acquire the at least one file from at least one file storage area connected to an external system and provide the acquired file to the display, and
create print data, based on at least one print page that has received a selection instruction via the selection.

2. The device of claim 1,
wherein the display is further configured to display printed images corresponding to individual pages of the acquired files, and
wherein the at least one processor is further configured to control to select one or more pages to print from among the acquired files based on a received instruction for selecting the one or more pages.

3. The device of claim 1, wherein the at least one processor is further configured to control to:
split a print image and assign a number of print areas to one page of a print medium according to an input,
assign at least one print page to the print areas or combine split print areas with each other according to a received input for combining split print areas. and
print the at least one print page or the combined split print areas.

4. The device of claim 1, wherein the at least one processor is further configured to control to determine a layout of print areas for a print medium, based on at least one of a print area and a print orientation of the print medium.

5. The device of claim 4, wherein the at least one processor is further configured to control to:
rotate an orientation of a printer page based on a received input for rotating the orientation of the printer page, and
rotate the printer page according to a rotation direction of the received input for rotating the orientation of the printer page and assign print pages to the rotated printer page;
or rotate an orientation of print pages assigned to a printer page based on a received input for rotating the orientation of the print pages and rotate the printing page, relative to the printer page, according to a rotation direction of the received input for rotating the orientation of the print pages.

6. The device of claim 4, wherein the at least one processor is further configured to control to:
rotate a printer page along with print pages based on a received input for rotating the printer page, and
rotate the printer page along with the print pages, while maintaining an orientation of the print pages fixed to the printer page, according to a rotation direction of the received input for rotating the printer page.

7. The device of claim 1, wherein the at least one processor is further configured to control to:
take an image of a manuscript on a photography copy stand,
create photographic image data,
edit the photographic image data according to an editing instruction, and
perform the print process based on the edited photographic image data.

8. The device of claim 1, wherein the at least one processor is further configured to control to:
determine whether a user can be logged in, based on a user's log-in input, and
acquire files in a range of reference authority allowed for the logged-in user, from among a number of files stored in the file storage area,
wherein the at least one file storage area comprises at least one of a storage area of a user's computer and a storage area of a server connected to a network.

9. The device of claim 8, further comprising: wherein the at least one processor is further configured to control to:
read out identification information for identifying users from a number of storage media approaching a communication range, respectively,
perform authentication using the readout identification information, respectively, and
acquire files within a range based on the reference authority allowed for a user corresponding to identification information which comprises obtained authentication.

10. The device of claim 1, wherein the at least one processor is further configured to control to:
acquire a recommended file containing content related to a logged-in user from a server connected to an outside; and
select a page contained in the recommended file based on a received instruction.

11. The device of claim 1, wherein the at least one processor is further configured to set the number of copies of at least one print page, respectively; and
automatically change a size of print pages to correspond to a size of print areas for the print medium or change a layout of the print medium when the at least one print page is greater than the print area.

12. The device of claim 1, wherein the at least one processor is further configured to:
receive an instruction for performing the replacement of a selected print page, and
alter the selected print page to another page.

13. The device of claim 3, wherein the at least one processor is further configured to:
receive an instruction for changing a size of a print area, and
change the size of the print area of the print medium.

14. The device of claim 3, wherein the at least one processor is further configured to:
receive an instruction for changing a location, a rotation, an orientation, and a size of the at least one print page, and
change the location, the rotation, the orientation, and the size of the at least one print page within a print area.

15. An image forming method of an image forming device, the image forming method comprising:
displaying, by a display, print images based on at least one file;
receiving an instruction for selecting a page to print (print page) from the displayed print images;
performing a print process based on the print page;
acquiring at least one file from a file storage area connected to an external system;
providing the acquired file to the display; and
creating print data based on a print page which has received a selection instruction.
